# EUROPÄISCHE PATENTSCHRIFT

(11) **EP 2 718 174 B1**
(45) Veröffentlichungstag und Bekanntmachung des Hinweises auf die Patenterteilung: **08.04.2020**
(21) Anmeldenummer: 12725448.0
(22) Anmeldetag: 04.06.2012
(51) Int. Cl.: B62M 11/06, B62M 11/14

(54) **SCHALTVORRICHTUNG UND GETRIEBEEINHEIT**
SELECTOR DEVICE AND TRANSMISSION UNIT
DISPOSITIF DE CHANGEMENT DE VITESSE ET UNITÉ DE TRANSMISSION

(30) Priorität: 09.06.2011 DE 102011106107
(43) Veröffentlichungstag der Anmeldung: 16.04.2014
(73) Patentinhaber: Pinion GmbH, 73770 Denkendorf (DE)
(72) Erfinder: SCHMITZ, Michael, 56412 Niederelbert (DE); LERMEN, Christoph, 66636 Tholey (DE)
(74) Vertreter: Witte, Weller & Partner Patentanwälte mbB
(86) Internationale Anmeldenummer: PCT/EP2012/060530
(87) Internationale Veröffentlichungsnummer: WO 2012/168202

(56) Entgegenhaltungen:
- CN-A- 1 093 328
- DE-A1-102008 035 317
- DE-A1-102008 064 514
- ES-A1- 2 217 929
- JP-A- 54 108 169
- US-A- 4 702 121
- US-A- 5 689 998

## Beschreibung

Die Erfindung betrifft eine Schaltvorrichtung für eine Getriebeeinheit, insbesondere für ein mit Muskelkraft angetriebenes Fahrzeug, mit einer Welle, an der eine Mehrzahl von Losrädern gelagert ist, die mit einer entsprechenden Mehrzahl von Zahnrädern Radpaare wenigstens eines Teilgetriebes bilden, wobei die Welle als Hohlwelle ausgebildet ist und die Losräder mittels Schaltmitteln mit der Welle verbindbar sind, wobei die Schaltmittel mittels wenigstens einer in der Hohlwelle gelagerten Nockenwelle selektiv betätigbar sind, um Gangstufen des Teilgetriebes zu realisieren.

Die Erfindung betrifft ferner eine Getriebeeinheit, insbesondere für ein mit Muskelkraft angetriebenes Fahrzeug, mit einer derartigen Schaltvorrichtung.

Die Erfindung betrifft schließlich ein Verfahren zum Schalten der oben genannten Schaltvorrichtung.

Derartige Schaltvorrichtungen und Getriebeeinheiten dienen dazu, Antriebskraft, insbesondere Muskelkraft, zu über- bzw. zu untersetzen und dadurch das Antreiben des Fahrzeugs zu erleichtern.

Aus der US 5,924,950 A ist ein derartiges Fahrradgetriebe bekannt. Dieses Fahrradgetriebe weist eine Eingangswelle und eine Vorgelegewelle auf, wobei an der Eingangswelle eine Mehrzahl von Antriebsrädern und an der Vorgelegewelle eine entsprechende Anzahl von schaltbaren angetriebenen Rädern gelagert ist. Die schaltbaren Räder der Vorgelegewelle werden mittels mehrerer, in der Vorgelegewelle angeordneten, axial verschieblichen Schaltbolzen und Freiläufen geschaltet, wobei die Vorgelegewelle über ein Planetengetriebe mit einem Ritzel als Ausgangsglied des Fahrradgetriebes verbunden ist. Das Ritzel ist über eine Kupplung mit dem Sonnenrad des Planetengetriebes verbunden und das Hohlrad des Planetengetriebes kann mittels eines Bowdenzugs gebremst bzw. festgelegt werden. Das Planetengetriebe bildet dadurch ein Zweiganggetriebe, das mit dem Siebenganggetriebe der Vorgelegewelle in Reihe geschaltet ist, so dass durch das gesamte Fahrradgetriebe vierzehn Gänge realisierbar sind. Nachteilig bei diesem System ist die axial große Bauform und die vergleichsweise geringe Anzahl von vierzehn realisierbaren Gängen. Ferner ist es nachteilig, dass die beiden Teilgetriebe separat angesteuert werden müssen und daher mit einem erhöhten Aufwand bedient werden müssen. In diesem Zusammenhang ist es weiterhin nachteilig, dass die beiden Teilgetriebe nicht aufeinander abgestimmt sind und somit das sequenzielle Durchschalten sämtlicher Gänge und insbesondere das gleichzeitige Umschalten beider Teilgetriebe unkomfortabel ist.

Aus der DE 10 2008 064 514 A1 ist eine weitere Getriebeeinheit für ein mit Muskelkraft betriebenes Fahrzeug bekannt mit einer Eingangswelle, einer Ausgangswelle und einer Vorgelegewelle, wobei an der Vorgelegewelle eine Mehrzahl von Losrädern gelagert ist, die mit Zahnrädern der Eingangswelle bzw. der Ausgangswelle Radpaare von zwei Teilgetrieben bilden und wobei die Losräder mittels schaltbarer Freiläufe mit der Vorgelegewelle drehfest verbindbar sind, wobei die Freiläufe durch zwei separate Nockenwellen betätigbar sind. Dabei ist die Steuerung der beiden Nockenwellen durch zwei separate Planetengetriebe mit einem entsprechenden Platzbedarf und einem zusätzlichen Steuerungsaufwand zur Synchronisation der beiden Teilgetriebe verbunden. Solche Beispiele sind in dem Dokument DE 10 2008 064514 A1 gezeigt, das den Oberbegriff der alternativen Ansprüche 1 und 2 offenbart.

Es ist daher die Aufgabe der vorliegenden Erfindung, eine verbesserte Schaltvorrichtung und eine verbesserte Getriebeeinheit für ein mit Muskelkraft betriebenes Fahrzeug bereitzustellen, die eine kompakte Bauform, einen verbesserten Schaltkomfort aufweist und mit geringem technischen Aufwand realisierbar ist.

Die Aufgabe wird durch die Lehre der alternativen Ansprüche 1 oder 2 gelöst. Die Unteransprüche zeigen weitere Ausgestaltungen der Erfindung.

In einer weiteren Ausgestaltung wird gemäß einem ersten Aspekt eine Schaltvorrichtung für eine Getriebeeinheit, insbesondere für ein mit Muskelkraft betriebenes Fahrzeug, mit einer Welle, an der eine Mehrzahl von Losrädern gelagert ist, die mit einer entsprechenden Mehrzahl von Zahnrädern Radpaare von zwei Teilgetrieben bilden, wobei die Welle als Hohlwelle ausgebildet ist und die Losräder mittels Schaltmitteln mit der Welle verbindbar sind, wobei den beiden Teilgetrieben jeweils eine in der Hohlwelle gelagerte Nockenwelle zugeordnet ist und die Schaltmittel durch die Nockenwelle selektiv betätigbar sind, wobei die Nockenwellen mit Antriebsmitteln verbunden sind, um die Nockenwellen zum Betätigen der Schaltmittel relativ zu der Welle zu rotieren, wobei die Nockenwellen drehfest miteinander verbunden sind und eine Rotation der Nockenwellen relativ zu der Welle eine Axialverschiebung einer der Nockenwellen bewirkt.

In einer weiteren Ausgestaltung wird gemäß einem zweiten Aspekt eine Schaltvorrichtung für eine Getriebeeinheit, insbesondere für ein mit Muskelkraft betriebenes Fahrzeug, mit einer Welle, an der eine Mehrzahl von Losrädern gelagert ist, die mit einer entsprechenden Mehrzahl von Zahnrädern Radpaare bilden, wobei die Welle als Hohlwelle ausgebildet ist und die Losräder mittels Schaltmitteln mit der Welle verbindbar sind, wobei den Schaltmitteln eine in der Hohlwelle gelagerte Nockenwelle zugeordnet ist und die Schaltmittel mittels der Nockenwelle selektiv betätigbar sind, wobei die Nockenwelle mit Antriebsmitteln verbunden ist, um die Nockenwelle zum Betätigen der Schaltmittel relativ zu der Welle zu rotieren, wobei die Rotation der Nockenwelle relativ zu der Welle einer Axialverschiebung der Nockenwelle bewirkt, wobei die Nockenwelle wenigstens einen Nockenabschnitt aufweist, der derart ausgebildet ist, dass die Schaltmittel von unterschiedlichen der Losräder durch den Nockenabschnitt betätigbar sind.

In einer weiteren Ausgestaltung wird gemäß einem dritten Aspekt eine Schaltvorrichtung für eine Getriebeeinheit, insbesondere für ein mit Muskelkraft betriebenes Fahrzeug, mit einer Welle, an der eine Mehrzahl von Losrädern gelagert ist, die mit einer entsprechenden Mehrzahl von Zahnrädern Radpaare von zwei Teilgetrieben bilden, wobei die Welle als Hohlwelle ausgebildet ist und die Losräder mittels Schaltmitteln mit der Welle verbindbar sind, wobei den beiden Teilgetrieben jeweils eine in der Hohlwelle gelagerte Nockenwelle zugeordnet ist und die Schaltmittel durch die Nockenwellen selektiv betätigbar sind, wobei die Nockenwellen mit Antriebsmitteln verbunden sind, um die Nockenwellen zum Betätigen der Schaltmittel relativ zu der Welle zu rotieren, wobei eine erste der Nockenwellen mittels einer Antriebswelle durch eine zweite der Nockenwellen hindurch mit den Antriebsmitteln verbunden ist.

Die Aufgabe der Erfindung wird gemäß einem vierten Aspekt gelöst durch eine Schaltvorrichtung für eine Getriebeeinheit, insbesondere für ein mit Muskelkraft angetriebenes Fahrzeug, mit einem ersten Teilgetriebe und einem zweiten Teilgetriebe, die zur Kraftübertragung in Reihe geschaltet sind, wobei das erste Teilgetriebe eine Welle aufweist, die als Hohlwelle ausgebildet ist, an der eine Mehrzahl von Losrädern gelagert ist, die mit einer entsprechenden Mehrzahl von Zahnrädern Radpaare des ersten Teilgetriebes bilden, wobei die Losräder mittels Schaltmitteln mit der Welle verbindbar sind, um unterschiedliche Gangstufen des ersten Teilgetriebes zu realisieren, wobei die Schaltmittel mittels einer in der Welle angeordneten Nockenwelle betätigbar sind, wobei die Schaltmittel des ersten Teilgetriebes als schaltbare Freiläufe ausgebildet sind und wobei das zweite Teilgetriebe eine Mehrzahl von schaltbaren Gangstufen aufweist, wobei die Nockenwelle derart ausgebildet ist, dass beim Schalten von einer höchsten der Gangstufen des ersten Teilgetriebes in eine niedrigste der Gangstufen des ersten Teilgetriebes wenigstens zeitweise die Freiläufe der beiden Gangstufen betätigt sind und ein Lastwechsel zwischen den entsprechenden Freiläufen einen Schaltvorgang des zweiten Teilgetriebes in eine höhere der Gangstufen zulässt.

Die Aufgabe der Erfindung wird gemäß einem fünften Aspekt gelöst durch eine Schaltvorrichtung für eine Getriebeeinheit, insbesondere für ein mit Muskelkraft angetriebenes Fahrzeug, mit einem ersten Teilgetriebe und einem zweiten Teilgetriebe, die zur Kraftübertragung in Reihe geschaltet sind, wobei das zweite Teilgetriebe eine Welle aufweist, die als Hohlwelle ausgebildet ist, an der eine Mehrzahl von Losrädern gelagert ist, die mit einer entsprechenden Mehrzahl von Zahnrädern Radpaare des zweiten Teilgetriebes bilden, wobei die Losräder mittels Schaltmitteln mit der Welle verbindbar sind, um unterschiedliche Gangstufen des zweiten Teilgetriebes zu realisieren, wobei die Schaltmittel mittels einer in der Welle angeordneten Nockenwelle betätigbar sind, wobei die Schaltmittel des zweiten Teilgetriebes als schaltbare Freiläufe ausgebildet sind, wobei das erste Teilgetriebe eine Mehrzahl von schaltbaren Gangstufen aufweist, wobei die Nockenwelle derart ausgebildet ist, dass beim Schalten von einer höheren der Gangstufen des zweiten Teilgetriebes in eine niedrigere der Gangstufen des zweiten Teilgetriebes wenigstens zeitweise die Freiläufe der beiden Gangstufen betätigt sind und ein Lastwechsel zwischen den entsprechenden Freiläufen einen Schaltvorgang des ersten Teilgetriebes von einer höchsten der Gangstufen des ersten Teilgetriebes in eine niedrigste der Gangstufen des ersten Teilgetriebes zulässt.

In einer weiteren Ausgestaltung wird gemäß einem sechsten Aspekt eine Schaltvorrichtung für eine Getriebeeinheit, insbesondere für ein mit Muskelkraft angetriebenes Fahrzeug, mit einer Welle, die als Hohlwelle ausgebildet ist, an der eine Mehrzahl von Losrädern gelagert ist, die mit einer entsprechenden Mehrzahl von Zahnrädern Radpaare unterschiedlicher Gangstufen bilden, wobei die Losräder mittels schaltbaren Freiläufen mit der Welle verbindbar sind, wobei die Freiläufe mittels einer in der Hohlwelle drehbar gelagerten Nockenwelle selektiv betätigbar sind, wobei die Nockenwelle mittels Antriebsmitteln in beiden Drehrichtungen relativ zu der Welle rotierbar ist, um die Freiläufe zu betätigen und außer Eingriff der Losräder zu bringen, wobei die Freiläufe an der Welle drehbar bzw. schwenkbar gelagerte Schaltklinken aufweisen, und wobei die Antriebsmittel derart ausgebildet sind, die Nockenwelle für einen Wechsel von einer höheren Gangstufe zu einer niedrigeren Gangstufe in einer Drehrichtung zu rotieren, die der Drehrichtung der Schaltklinken beim Außer-Eingriff-Bringen entgegengesetzt ist.

Gemäß einem siebten Aspekt wird die obige Aufgabe gelöst durch eine Getriebeeinheit, insbesondere für ein mit Muskelkraft angetriebenes Fahrzeug, mit einer Durchgangswelle, die eine Eingangswelle der Getriebeeinheit bildet und an ihren Enden mit Kurbeln verbindbar ist, einer Ausgangswelle, die koaxial zu der Eingangswelle angeordnet ist, und einer Vorgelegewelle mit einer Schaltvorrichtung der oben beschriebenen Art.

Gemäß einem achten Aspekt wird die Aufgabe gelöst durch ein Verfahren zum Schalten einer Getriebeeinheit, wobei Gangstufen der Getriebeeinheit mittels einer erfindungsgemäßen Schaltvorrichtung eingelegt und/oder gewechselt werden.

Ein Vorteil des ersten Aspekts ist es, dass die Nockenwellen miteinander verknüpft sind und dadurch die beiden Teilgetriebe durch die gemeinsame Rotation der Nockenwellen in Abhängigkeit voneinander geschaltet werden können und somit der Schaltaufwand zum Schalten der beiden Teilgetriebe reduziert ist und gleichzeitig der Schaltkomfort verbessert ist. Mit anderen Worten kann die Schaltvorrichtung alleine durch die gemeinsame Rotation der Nockenwellen beide Teilgetriebe schalten, wodurch das separate Schalten der beiden Teilgetriebe entfällt.

Ein Vorteil des zweiten Aspekts ist es, dass die Nocken der Nockenwelle mehrere der Schaltmittel betätigen und dadurch sich der nutzbare axiale Verschiebungsbereich vergrößert, wodurch eine axial kompaktere Bauform realisierbar ist.

Ein Vorteil des dritten Aspekts ist es, dass die beiden Nockenwellen von einem axialen Ende aus rotiert bzw. gesteuert werden, wodurch eine in axialer Richtung kompaktere Bauform möglich ist und wodurch der technische Aufwand zum Steuern der Nockenwellen reduziert ist. Mit anderen Worten müssen die Nockenwellen nicht von zwei gegenüberliegenden Seiten gesteuert werden, sondern können durch Antriebsmittel von einem axialen Ende aus rotiert bzw. gesteuert werden, wodurch der Aufwand zum Lagern der entsprechenden Welle reduziert ist.

Ein Vorteil des vierten Aspekts der Erfindung ist es, dass die beiden Teilgetriebe synchronisiert sind und bei einem Schaltvorgang in beiden Teilgetrieben, also wenn das erste der Teilgetriebe von einer höchsten in eine niedrigste Gangstufe geschaltet wird und gleichzeitig das zweite Teilgetriebe von einer niedrigen in eine höhere Gangstufe geschaltet wird, ein präzises zeitgleiches Umschalten möglich ist, da das zweite Teilgetriebe erst zum Zeitpunkt des tatsächlichen Lastwechsels des ersten Teilgetriebes geschaltet wird. Mit anderen Worten kann dadurch verhindert werden, dass eines der beiden Teilgetriebe vor dem anderen der Teilgetriebe geschaltet wird und dadurch das Gesamtgetriebe kurzzeitig in einen sehr niedrigen Gang oder einen sehr hohen Gang geschaltet wird. Dadurch ist insgesamt ein Zurückschalten des ersten Teilgetriebes und ein gleichzeitiges Hochschalten des zweiten Teilgetriebes möglich.

Ein Vorteil des fünften Aspekts der Erfindung ist es, dass die beiden Teilgetriebe synchronisiert sind und bei einem Schaltvorgang in beiden Teilgetrieben, also wenn das zweite Teilgetriebe von einer höheren in eine niedrige Gangstufe geschaltet wird und gleichzeitig das erste Teilgetriebe von einer niedrigsten in eine höchste Gangstufe geschaltet wird, ein präzises zeitgleiches Umschalten möglich ist, wodurch insgesamt das Schalten der Getriebeeinheit komfortabler wird.

Ein Vorteil des sechsten Aspekts ist es, dass ein Zurückschalten unter Last bzw. unter Teillast möglich wird, da die entsprechende Schaltklinke mit einer höheren Kraft außer Eingriff des entsprechenden Losrades gebracht werden kann. Bei dem Herunterschalten mittels schaltbarer Freiläufe ist es üblicherweise notwendig, die Antriebsleistung stark zu reduzieren oder kurzzeitig vollständig zu unterbrechen, damit die entsprechende Schaltklinke lastfrei wird und durch eine geringe Kraft eingeschwenkt werden kann, bevor die entsprechende Schaltklinke des niedrigeren Gangs mit dem Losrad in Eingriff gebracht werden kann. Da gemäß des vierten Aspekts der Erfindung eine wesentlich höhere Kraft auf die Schaltklinken zum Einschwenken der Schaltklinke ausgeübt werden kann, muss die Antriebsleistung nicht unterbrochen werden. Dadurch ist insgesamt ein Lastschaltgetriebe realisierbar, das sowohl unter Last hoch- als auch unter Last herunterschalten kann.

Bei dem ersten Aspekt ist es bevorzugt, wenn die Nockenwellen mittels einer Verbindungswelle drehfest und axial verschieblich miteinander verbunden sind.

Dadurch können die beiden Nockenwellen mit einfachen Mitteln kostengünstig drehfest und axial verschieblich miteinander verbunden werden.

Es ist weiterhin bevorzugt, wenn die axial verschiebliche zweite Nockenwelle eine wenigstens teilweise umlaufende Nut mit einem schräg verlaufenden Abschnitt aufweist, in die ein Stift eingreift, der mit der Welle verbunden ist, wobei der Schrägabschnitt an einer vordefinierten Rotationsposition der Nockenwelle die Axialverschiebung bewirkt.

Dadurch kann mit technisch einfachen Mitteln die Axialverschiebung zuverlässig an bestimmten Rotationspositionen und mit geringer Reibung bewirkt werden.

Es ist weiterhin bevorzugt, wenn die axial verschiebliche Nockenwelle wenigstens einen Nockenabschnitt aufweist, mit einem Betätigungsabschnitt, um die Schaltmittel durch die Rotation der Nockenwelle zu betätigen, und einem wenigstens teilweise umlaufenden Gleitabschnitt, um den Schaltzustand der Schaltmittel über einen vordefinierten Drehwinkel beizubehalten.

Dadurch können die Schaltmittel in einer bestimmten Rotation durch die Rotation der Nockenwelle betätigt werden und über einen vordefinierten Drehwinkel den Schaltzustand beibehalten, wodurch die Schaltabläufe des ersten und zweiten Teilgetriebes logisch miteinander verknüpft werden können. Mit anderen Worten kann ein Schaltzustand in dem zweiten Teilgetriebe dadurch ausgewählt werden und über mehrere Schaltvorgänge des ersten Teilgetriebes beibehalten werden.

Dabei ist es bevorzugt, wenn sich der Betätigungsabschnitt und der Gleitabschnitt in Rotationsrichtung aneinander anschließen.

Dadurch können die ausgewählten Schaltzustände mit technisch einfachen Mitteln über einen vordefinierten Drehwinkel der Nockenwellen beibehalten werden.

Es ist dabei bevorzugt, wenn die Schaltmittel, der Nockenabschnitt und der schräg verlaufende Abschnitt derart angeordnet sind, dass die Schaltmittel von unterschiedlichen Gangstufen von dem Nockenabschnitt betätigbar sind.

Dadurch lässt sich der nutzbare axiale Verschiebungsbereich vergrößern, ohne dass die Abstände der Schaltmittel vergrößert werden müssen, wodurch insgesamt eine axial kompaktere Bauform realisierbar ist.

Es ist ferner bevorzugt, wenn der Gleitabschnitt vollständig um die Nockenwelle umlaufend ausgebildet ist, um einen entsprechenden Schaltzustand über eine vollständige Umdrehung der Nockenwelle beizubehalten.

Dadurch kann ein Schaltzustand des zweiten Teilgetriebes über eine vollständige Schaltsequenz aller Gangstufen des ersten Teilgetriebes beibehalten werden, wodurch mit einfachen Mitteln alle Gänge der Getriebeeinheit durchgeschaltet werden können.

Bei dem dritten Aspekt ist es bevorzugt, wenn die Antriebsmittel beider Nockenwellen an einem axialen Ende der Welle angeordnet sind.

Dadurch ist eine insgesamt auch in radialer Richtung kompakte Bauform der Schaltvorrichtung bzw. der entsprechenden Getriebeeinheit realisierbar.

Es ist besonders bevorzugt, wenn die Antriebsmittel ein Drehzahlüberlagerungsgetriebe aufweisen.

Dadurch ist mit technisch einfachen Mitteln eine Relativdrehung zwischen der Nockenwelle und der Welle realisierbar.

Es ist dabei besonders bevorzugt, wenn die Antriebsmittel zwei, insbesondere drei oder mehr miteinander verbundene Planetengetriebe aufweisen.

Dadurch ist ein kompaktes und technisch einfaches Drehzahlüberlagerungsgetriebe realisierbar, um eine und insbesondere zwei Nockenwellen relativ zu der Welle zu rotieren.

Es ist dabei bevorzugt, wenn Planetenträger der Planetengetriebe miteinander verbunden sind.

Dadurch ist mit geringem technischem Aufwand eine Drehzahl über die Hohlräder der Planetengetriebe auf die Nockenwellen übertragbar.

Es ist dabei bevorzugt, wenn die Antriebsmittel eine Übertragungsstufe aufweisen, um die Rotation der Welle auf die Nockenwellen zu übertragen und wobei die Antriebsmittel zwei Steuerstufen aufweisen, um separat eine Relativdrehung auf die jeweiligen Nockenwellen zu übertragen.

Dadurch können beide Nockenwellen durch eine gemeinsame Übertragungsstufe synchron zu der Welle rotiert werden und es kann unabhängig voneinander eine Relativdrehung auf die Nockenwellen übertragen werden, wodurch die Antriebsmittel insgesamt kompakter realisierbar sind und wodurch ein geringerer Bauraum benötigt wird.

Bei dem vierten und fünften Aspekt der Erfindung ist es bevorzugt, wenn der Lastwechsel eine Bewegung der Nockenwelle zulässt, die den Schaltvorgang in dem jeweils anderen der Teilgetriebe einleitet.

Dadurch kann ein Schaltvorgang des jeweils anderen Teilgetriebes mit technisch einfachen Mitteln mechanisch eingeleitet werden.

Es ist dabei bevorzugt, wenn die Nockenwelle in einem Zwischenzustand, in dem die Freiläufe der beiden Gangstufen des ersten Teilgetriebes bzw. des zweiten Teilgetriebes gleichzeitig betätigt sind, gegen den entsprechenden Freilauf vorgespannt ist und bei dem Lastwechsel freigegeben wird.

Dadurch kann mit einfachen Mitteln zuverlässig der tatsächliche Zeitpunkt des Lastwechsels ermittelt und an das zweite Teilgetriebe weitergeleitet werden. Dadurch ist ein gleichzeitiges Schalten beider Teilgetriebe realisierbar, wodurch ein kurzzeitiges Umschalten der Schaltvorrichtung in einen sehr viel niedrigeren Gang oder in einen sehr viel höheren Gang vermieden werden kann.

Dabei ist es bevorzugt, wenn das zweite Teilgetriebe durch eine Mehrzahl von an der Welle gelagerten Losrädern gebildet ist, die mit einer entsprechenden Mehrzahl von Zahnrädern Radpaare des zweiten Teilgetriebes bilden, wobei das zweite Teilgetriebe eine in der Welle drehbare und/oder axial verschiebliche Nockenwelle aufweist, die dazu ausgebildet ist, bei dem Lastwechsel einen Gangwechsel in dem zweiten Teilgetriebe durchzuführen und insbesondere Freiläufe von zwei aufeinanderfolgenden Gangstufen gleichzeitig zu betätigen.

Dadurch ist eine kompakte Bauform der Schaltvorrichtung realisierbar, da auf aufwendige Mittel zum Verknüpfen der Schaltvorgänge in den beiden Teilgetrieben verzichtet werden kann.

Es ist dabei bevorzugt, wenn die Freiläufe verschwenkbare Freilaufklinken aufweisen, die in dem Zwischenzustand vor dem Lastwechsel die Rotation der Nockenwelle blockieren.

Dadurch kann die Schaltvorrichtung in einer kompakten Bauform realisiert werden und der Lastwechsel mit technisch geringem Aufwand erfasst und an das zweite Teilgetriebe übertragen werden.

Es ist insgesamt bei allen Aspekten der vorliegenden Erfindung bevorzugt, wenn die Antriebsmittel dazu ausgebildet sind, die Nockenwelle bzw. die Nockenwellen synchron zu der Welle zu rotieren, um einen Schaltzustand beizubehalten und wenigstens eine der Nockenwellen relativ zu der Welle zu rotieren, um einen Schaltzustand zu verändern.

Dadurch ist eine einfache und kompakte Schaltvorrichtung realisierbar.

Es ist weiterhin bei allen Aspekten der Erfindung bevorzugt, wenn jeweils zwei aufeinanderfolgende Gänge gleichzeitig betätigbar sind.

Dadurch kann ein Lastschaltgetriebe realisiert werden, wodurch gleichzeitig ein Leertreten verhindert wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht eines Fahrradrahmens mit einem Mehrganggetriebe;
- Fig. 2: einen Schaltplan eines Mehrganggetriebes mit zwei Teilgetrieben und einer gemeinsamen Vorgelegewelle;
- Fig. 3: einen schematischen Schaltplan einer Schaltvorrichtung mit einer rotierbaren und einer axial verschieblichen Nockenwelle;
- Fig. 4: eine perspektivische Darstellung einer Ausführungsform einer Getriebeeinheit mit zwei Teilgetrieben und einer gemeinsamen Vorgelegewelle;
- Fig. 5: eine perspektivische Explosionsdarstellung einer Schaltvorrichtung mit einer rotierbaren und einer axial verschieblichen Nockenwelle;
- Fig. 6: eine perspektivische Zusammenbauzeichnung der Nockenwellen aus Fig. 5;
- Fig. 7a bis d: unterschiedliche Axial- und Rotationspositionen der axial verschieblichen Nockenwelle zur Betätigung einer Schaltklinke;
- Fig. 8a und b: die axial verschiebliche Nockenwelle in zwei axialen Extrempositionen;
- Fig. 9: eine Schaltvorrichtung mit zwei unabhängig verdrehbaren Nockenwellen und einem dreifachen Planetengetriebe;
- Fig. 10a bis d: eine Schaltsequenz zur Erläuterung der Synchronisation beider Teilgetriebe;
- Fig. 11a und b: ein Losrad in axialer Blickrichtung zur Erläuterung der Betätigung der Freilaufklinken; und
- Fig. 12a bis f: zwei Losräder aufeinanderfolgender Gangstufen in axialer Blickrichtung zur Erläuterung des Schaltens unter Last.

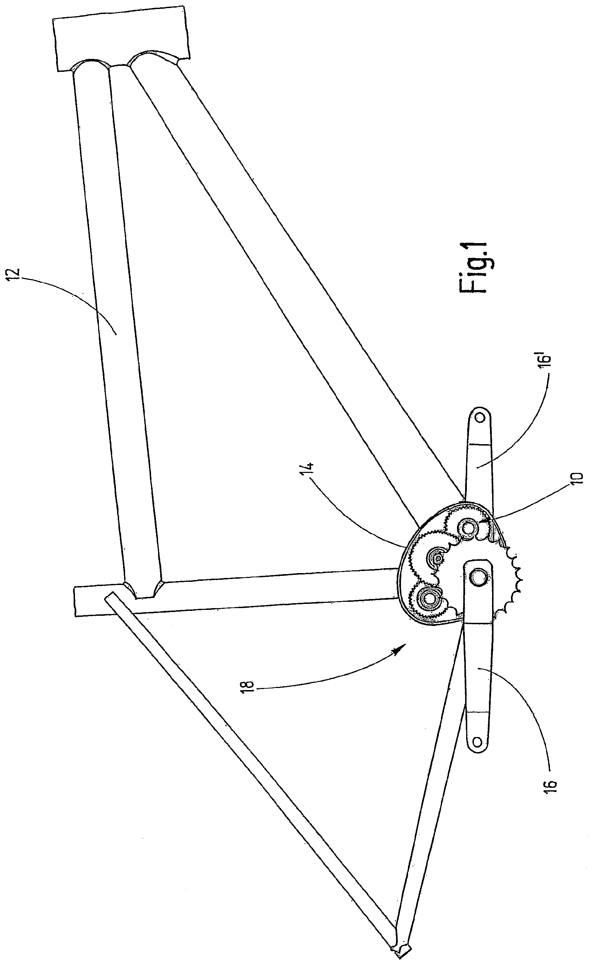

In Fig. 1 ist eine Getriebeeinheit allgemein mit 10 bezeichnet.

Fig. 1 zeigt eine Seitenansicht eines Fahrradrahmens 12, der ein Getriebegehäuse 14 aufweist, in dem die Getriebeeinheit 10 aufgenommen ist. Die Getriebeeinheit 10 ist in dieser Darstellung nur schematisch angedeutet und ist als kompakte Einheit ausgebildet, die vorzugsweise in einem hier nicht dargestellten Getriebekäfig angeordnet ist. Die Getriebeeinheit 10 wird hierin beispielhaft für den Einsatz bei einem Zweirad beschrieben, wobei allerdings auch der Einsatz bei anderen mit Muskelkraft betriebenen Fahrzeugen möglich ist. Es versteht sich, dass die Getriebeeinheit 10 auch für Fahrzeuge verwendet werden kann, bei denen Muskelkraft in Kombination mit einer Antriebsmaschine zum Antreiben des Fahrzeugs verwendet wird.

Die Getriebeeinheit 10 und das Getriebegehäuse 14 bilden zusammen mit Tretkurbeln 16 und 16' ein Mehrgang-Getriebe 18.

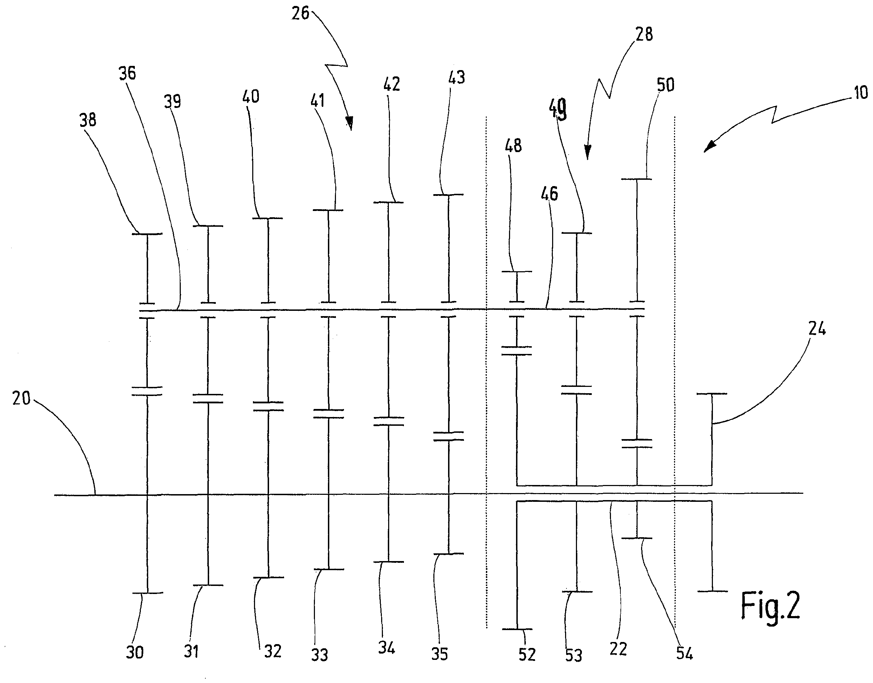

Fig. 2 zeigt einen Schaltplan der Getriebeeinheit 10.

Die Getriebeeinheit 10 weist eine Eingangswelle 20 und eine Ausgangswelle 22 auf. Die Eingangswelle 20 ist als Durchgangswelle ausgebildet. Die Ausgangswelle 22 ist als Hohlwelle ausgebildet. Die Eingangswelle 20 und die Ausgangswelle 22 sind koaxial zueinander angeordnet. Die Ausgangswelle 22 ist mit einem Kettenblatt 24 drehfest verbunden, das ein Ausgangsglied der Getriebeeinheit 10 bildet.

Die Getriebeeinheit 10 weist ein erstes Teilgetriebe 26 und ein zweites Teilgetriebe 28 auf. An der Eingangswelle 20 ist eine Mehrzahl von Antriebsrädern 30, 31, 32, 33, 34, 35 gelagert. Das erste Teilgetriebe 26 weist eine Vorgelegewelle 36 auf. An der Vorgelegewelle 36 sind angetriebene Räder 38, 39, 40, 41, 42, 43 gelagert. Die angetriebenen Räder 38 bis 43 sind als Losräder ausgebildet.

Die angetriebenen Räder 38 bis 43 sind mittels nicht dargestellten Schaltmitteln mit der Vorgelegewelle 36 verbindbar. Die angetriebenen Räder 38 bis 43 und die Antriebsräder 30 bis 35 bilden Radpaare, die unterschiedliche Übersetzungen aufweisen, so dass durch selektives Verbinden der angetriebenen Räder 38 bis 43 mit der Vorgelegewelle 36 unterschiedliche Gangstufen realisiert werden können.

Das zweite Teilgetriebe 28 weist eine Eingangswelle 46 auf. An der Eingangswelle 46 sind Antriebsräder 48, 49, 50 gelagert. Die Antriebsräder 48 bis 50 sind als Losräder ausgebildet. Die Antriebsräder 48 bis 50 sind mittels Schaltmitteln mit der Eingangswelle 46 drehfest verbindbar. An der Ausgangswelle 22 sind die angetriebenen Räder 52, 53, 54 gelagert. Die angetriebenen Räder 52 bis 54 stehen in kämmendem Eingriff mit den Antriebsrädern 48 bis 50.

Durch die miteinander kämmenden angetriebenen Räder 52 bis 54 und Antriebsräder 48 bis 50 werden Radpaare gebildet, die unterschiedliche Übersetzungen aufweisen. Die Antriebsräder 48 bis 50 sind mittels nicht dargestellten Schaltmitteln mit der Eingangswelle 46 drehfest verbindbar, wodurch unterschiedliche, wählbare Gangstufen des zweiten Teilgetriebes 28 gebildet werden.

Die Vorgelegewelle 36 des ersten Teilgetriebes 26 ist drehfest mit der Eingangswelle des zweiten Teilgetriebes 28 verbunden. Vorzugsweise ist die Vorgelegewelle 36 mit der Eingangswelle 46 einstückig ausgebildet.

Vorzugsweise sind die Antriebsräder 30 bis 35 mit der Eingangswelle 20 jeweils mittels einer nicht dargestellten Kupplung kraftschlüssig und insbesondere mittels einer Reibkupplung reibschlüssig verbunden. Die Kupplung ist dazu ausgelegt, ein in die Getriebeeinheit 10 eingeleitetes Drehmoment zu begrenzen. Die Kupplung ist dazu ausgelegt, dass, sofern ein vordefiniertes oder einstellbares Drehmoment überschritten wird, die Verbindung zwischen der Eingangswelle 20 und dem entsprechenden Antriebsrad 30 bis 35 schlupft. Durch eine derartige Drehmomentbegrenzung kann die Baugröße und das Gewicht der Getriebeeinheit reduziert werden, da die Getriebeeinheit auf ein geringeres maximales Drehmoment ausgelegt werden kann.

Dadurch, dass das erste Teilgetriebe 26 mit dem zweiten Teilgetriebe 28 verbunden ist, multiplizieren sich die möglichen realisierbaren Gangstufen des ersten Teilgetriebes 26 mit den Gangstufen des zweiten Teilgetriebes 28. Somit sind durch die in Fig. 2 dargestellte Getriebeeinheit 10 achtzehn Gänge realisierbar.

Weiterhin ist es denkbar, dass die Eingangswelle 20 mittels einer nicht dargestellten Kupplung mit der Ausgangswelle 22 drehfest verbindbar ist. Dadurch wäre ein weiterer Gang als Direktgang realisierbar.

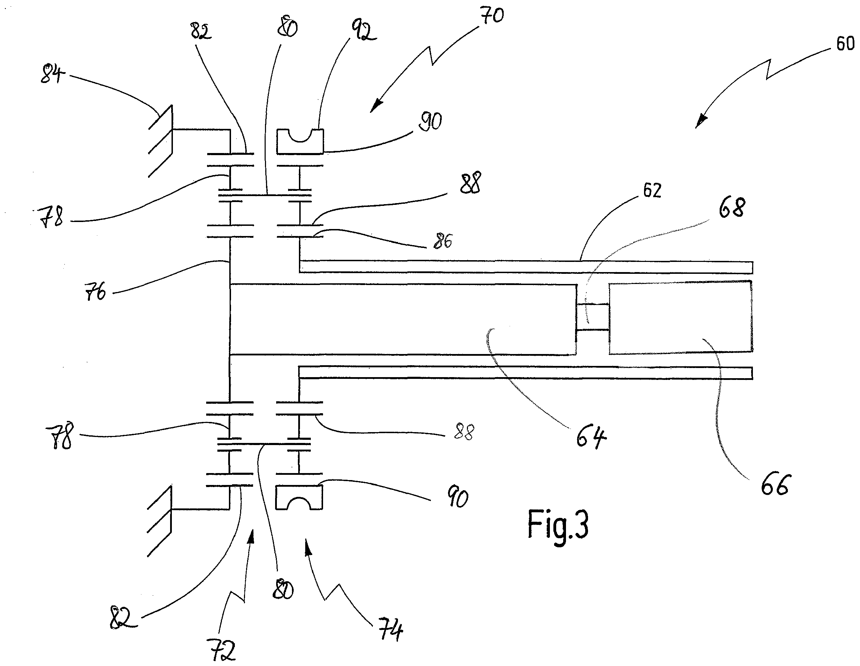

In Fig. 3 ist ein Schaltplan einer Schaltvorrichtung mit einer axial verschieblichen Nockenwelle schematisch dargestellt. In Fig. 3 ist die Schaltvorrichtung allgemein mit 60 bezeichnet. Die Schaltvorrichtung 60 dient im Allgemeinen dazu, auf einer Welle 62 gelagerte, nicht dargestellte Losräder von zwei unterschiedlichen Teilgetrieben mit nicht dargestellten Schaltmitteln selektiv mit der Welle 62 drehfest zu verbinden. Die Schaltvorrichtung 60 weist eine erste Nockenwelle 64 auf, die koaxial in der Welle 62 angeordnet und relativ zu dieser drehbar gelagert ist. Die Schaltvorrichtung 60 weist ferner eine zweite Nockenwelle 66 auf, die koaxial in der Welle 62 angeordnet und relativ zu dieser drehbar und axial verschieblich gelagert ist. Die erste Nockenwelle 64 und die zweite Nockenwelle 66 sind mittels einer Verbindungswelle 68 miteinander drehfest und axial verschieblich verbunden.

An einem axialen Ende der Welle 62 ist ein Drehzahlüberlagerungsgetriebe 70 angeordnet, das sowohl mit der Welle 62 als auch mit der Nockenwelle 64 verbunden ist. Das Drehzahlüberlagerungsgetriebe 70 ist koaxial zu der Welle 62 angeordnet. Das Drehzahlüberlagerungsgetriebe 70 ist gebildet durch eine Übertragungsstufe 72 und eine Steuerstufe 74. Die Steuerstufe 74 ist mit der Welle 62 verbunden und die Übertragungsstufe 72 ist mit der Nockenwelle 64 verbunden. Alternativ kann auch die Steuerstufe 74 mit der Nockenwelle 64 und die Übertragungsstufe 72 mit der Welle 62 verbunden sein. Die Übertragungsstufe 72 ist durch ein erstes Planetengetriebe 72 gebildet. Die Steuerstufe 74 ist durch ein zweites Planetengetriebe 74 gebildet. Das erste Planetengetriebe 72 weist ein Sonnenrad 76 auf, das mit der Nockenwelle 64 drehfest verbunden ist. Das Planetengetriebe 72 weist Planetenräder 78 auf, die an einem Planetenträger 80 gelagert sind. Die Planetenräder 78 kämmen mit dem Sonnenrad 76. Das erste Planetengetriebe 72 weist ein Hohlrad 82 auf, mit dem die Planetenräder 78 kämmen. Das Hohlrad 82 ist mit einem festen Bezugspunkt 84, vorzugsweise einem nicht dargestellten Getriebekäfig bzw. Getriebegehäuse festgelegt und mit diesem drehfest verbunden.

Das zweite Planetengetriebe 74 weist ein Sonnenrad 86 auf, das mit der Welle 62 drehfest verbunden ist. Das zweite Planetengetriebe 74 weist Planetenräder 88 auf, die an dem Planetenträger 80 gelagert sind. Die Planetenräder 84 kämmen mit dem Sonnenrad 86. Das zweite Planetengetriebe 74 weist ein Hohlrad 90 auf, mit dem die Planetenräder 88 kämmen. Das Hohlrad 90 ist mit einer Zugscheibe 92 drehfest verbunden, an der ein nicht dargestellter Bowdenzug befestigt werden kann.

Das erste Planetengetriebe 72 und das zweite Planetengetriebe 74 sind derart dimensioniert, dass bei stillstehendem bzw. festgehaltenem Hohlrad 90 die Übersetzung von der Welle 62 auf die Nockenwelle 64 gerade 1 ist, so dass in diesem Fall die Welle 62 und die Nockenwelle 64 synchron rotieren. Das zweite Planetengetriebe 74 bzw. die Steuerstufe 74 dient dazu, eine zusätzliche Drehzahl der Drehzahl der Welle 62 zu überlagern. Diese zusätzliche Drehzahl wird über das Hohlrad 90 auf den Planetenträger 80 übertragen. Dadurch, dass die Planetenräder 88 des zweiten Planetengetriebes 74 und die Planetenräder 78 des ersten Planetengetriebes 72 über den Planetenträger 80 miteinander verbunden sind, wird eine Gesamtdrehzahlsumme aus der Drehzahl der Welle 62 und der Drehung des Hohlrades 90 auf das erste Planetengetriebe 72 übertragen. Das erste Planetengetriebe 72 bzw. die Übertragerstufe 72 dient dazu, die gesamte Drehzahl auf die Nockenwelle 64 zu übertragen. Das Hohlrad 90 ist mit der Zugscheibe 92 drehfest verbunden, um mittels eines nicht dargestellten Bowdenzuges betätigt zu werden. Dabei wird die Zugscheibe 92 um einen bestimmten Drehwinkel in Richtung der Rotation der Welle 62 oder entgegen der Rotation der Welle 62 rotiert, um diese Drehbewegung auf die Nockenwelle 64 zu übertragen. Dadurch können die Gänge der Getriebeeinheit 10 durch Betätigen des Bowdenzugs geschaltet werden. Das Sonnenrad 86 ist vorzugsweise als Teil der Welle 62 bzw. einstückig mit der Welle 62 ausgebildet.

Die Nockenwelle 66 ist mittels der Verbindungswelle 68 drehfest und axial verschieblich mit der Nockenwelle 64 verbunden. Die Nockenwelle 66 ist über einen Steuerstift oder dergleichen mit der Welle 62 derart verbunden, dass eine Relativdrehung der Nockenwelle 66 zu der Welle 62 die Axialverschiebung der Nockenwelle 66 bewirkt.

Dadurch können die Nockenwellen 64 und 66 Schaltmittel von Losrädern unterschiedlicher Teilgetriebe selektiv betätigen, wobei durch die vordefinierte Axialverschiebung der Nockenwelle 66 bestimmte Schaltsequenzen der beiden Teilgetriebe realisiert werden können.

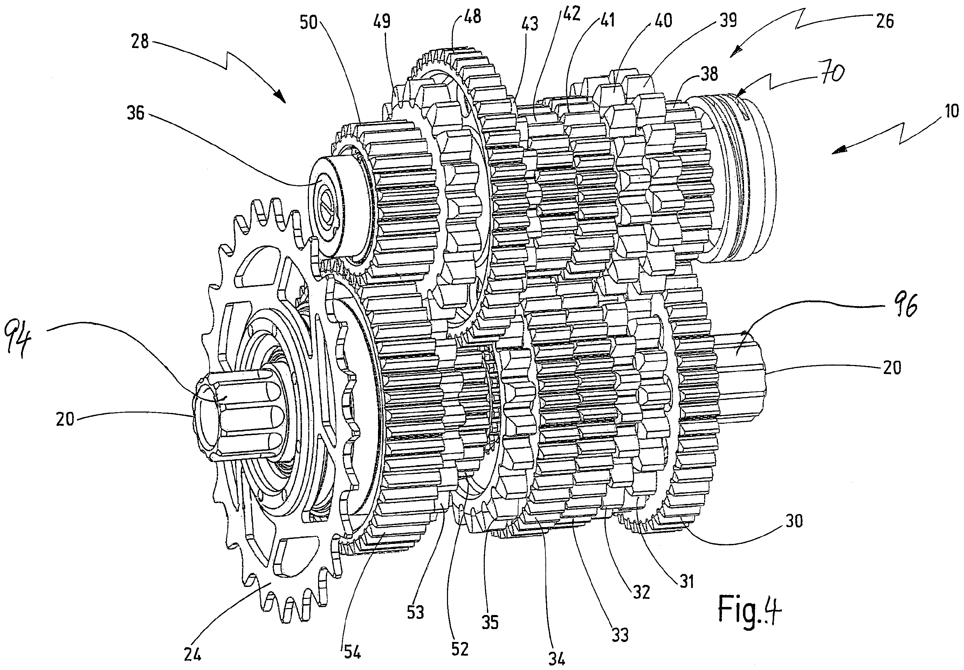

In Fig. 4 ist eine perspektivische Darstellung der Getriebeeinheit 10 gezeigt. Die Getriebeeinheit 10 entspricht dem Schaltplan gemäß Fig. 2, wobei gleiche Elemente mit gleichen Bezugsziffern bezeichnet sind und hier lediglich die Unterschiede erläutert sind.

Die Eingangswelle 20 weist an ihren axialen Enden Verbindungsabschnitte 94, 96 auf, um nicht dargestellte Tretkurbeln mit der Eingangswelle 20 drehfest zu verbinden. An einem axialen Ende der nicht dargestellten Ausgangswelle 22 ist das Kettenblatt 24 gelagert. Das Kettenblatt 24 ist mittels einer Zentralschraube 94 mit einem nicht dargestellten Verbindungselement verbunden und dadurch mit der Ausgangswelle 22 drehfest verbunden.

Die Vorgelegewelle 36 ist parallel zu der Eingangswelle 20 angeordnet. An der Vorgelegewelle 36, die einstückig mit der Eingangswelle 46 des zweiten Teilgetriebes 28 ausgebildet ist, sind die Losräder 38 bis 43 und 48 bis 50 gelagert. An einem axialen Ende der Vorgelegewelle 36 ist das Drehzahlüberlagerungsgetriebe 70 gelagert. Die Losräder 38 bis 43 und 48 bis 50 sind über die nicht dargestellte Nockenwelle 64 in Verbindung mit den nicht dargestellten Schaltmitteln mit der Vorgelegewelle 36 verbindbar bzw. schaltbar, wobei die Nockenwelle 64 mittels des Drehzahlüberlagerungsgetriebes 70 relativ zu der Vorgelegewelle 36 drehbar ist.

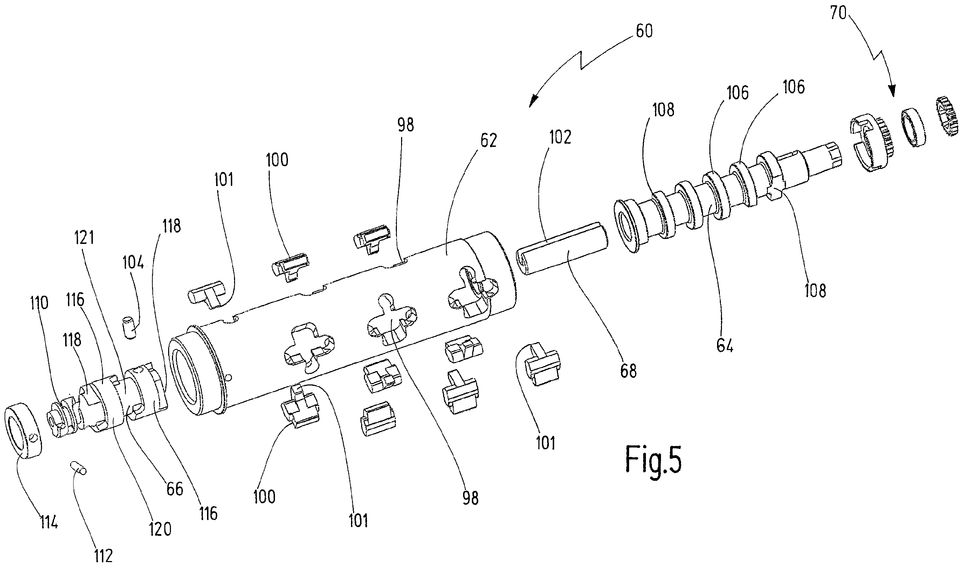

In Fig. 5 ist eine perspektivische Explosionsdarstellung der Schaltvorrichtung 60 dargestellt. Gleiche Elemente sind mit gleichen Bezugsziffern versehen, wobei hier lediglich die Unterschiede erläutert sind.

Die Welle 62 weist eine Mehrzahl von Ausnehmungen 98 auf, in denen Schaltklinken 100 gelagert sind. Die Schaltklinken 100 weisen jeweils einen Betätigungsabschnitt 101 bzw. eine Betätigungsfahne 101 auf. Die Schaltklinken 100 sind in den Ausnehmungen 98 schwenkbar bzw. drehbar gelagert, um in eine Innenverzahnung von nicht dargestellten Losrädern zu greifen und die Losräder drehfest mit der Welle 62 zu verbinden. Die Schaltklinken 100 sind an der Welle 62 derart gelagert, dass die Betätigungsabschnitte 101 in einem eingeschwenkten Zustand der Schaltklinken 100 in der jeweiligen Ausnehmung 98 angeordnet sind und in einem ausgeschwenkten Zustand in die Welle 62 hineinragen. Die Nockenwellen 64, 66 sind koaxial in der Welle 62 drehbar gelagert. Die erste Nockenwelle 64 und die zweite Nockenwelle 66 sind über die Verbindungswelle 68 axial verschieblich und drehfest miteinander verbunden. Dazu weist die Verbindungswelle 68 eine Längsnut 102 auf, in die ein Stift 104 der zweiten Nockenwelle 66 eingreift. Die erste Nockenwelle 64 ist mittels des Drehzahlüberlagerungsgetriebes 70 mit der Welle 62 verbunden, um eine Relativdrehung zu der Welle 62 zu realisieren. Die erste Nockenwelle 64 weist eine Mehrzahl von Nocken 106 auf, die jeweils einen Betätigungsabschnitt 108 aufweisen. Die Nocken 106 und die Betätigungsabschnitte 108 dienen dazu, die Betätigungsabschnitte 101 der Schaltklinken 100 in unterschiedlichen Rotationspositionen der Nockenwelle 64 selektiv zu betätigen und dadurch unterschiedliche Gangstufen des ersten Teilgetriebes 26 zu realisieren.

Die Schaltklinken 100 sind derart ausgebildet, dass sie nach außen schwenken und ein entsprechendes der Losräder drehfest mit der Welle 62 verbinden, sofern von der jeweiligen Nockenwelle 64, 66 kein Druck auf den jeweiligen Betätigungsabschnitt 101 der Schaltklinken 100 ausgeübt wird. Dazu sind die Schaltklinken 100 entsprechend federnd vorgespannt. Mit anderen Worten ist eine Schaltklinke 100 eingeschwenkt, sofern unter der Schaltklinke 100 ein Gleitabschnitt 106, 116 der Nockenwellen 64, 66 angeordnet ist und wird ausgeschwenkt, sofern ein Betätigungsabschnitt 108, 118 unter der Schaltklinke 100 angeordnet ist.

Die zweite Nockenwelle 66 weist eine umfängliche Nut 110 auf, in die ein Stift 112 eingreift. Der Stift 112 ist mittels eines Lagerrings 114 drehfest mit der Welle 62 verbunden. Die umfängliche Nut 110 der zweiten Nockenwelle 66 ist derart ausgebildet, dass eine Rotation der zweiten Nockenwelle 66 relativ zu der Welle 62 eine Axialverschiebung der Nockenwelle 66 bewirkt, wie es im Folgenden näher erläutert ist.

Die zweite Nockenwelle 66 weist zwei Nocken 116 auf, die jeweils zwei Betätigungsabschnitte 118 und jeweils einen Gleitabschnitt 120 aufweisen. Die Betätigungsabschnitte 118 dienen dazu, die Schaltklinken 100 des zweiten Teilgetriebes 28 zu betätigen. Die Gleitabschnitte 120 dienen dazu, den Schaltzustand der Schaltklinken 100 über einen vordefinierten Drehwinkel der Welle 66 beizubehalten, d.h. die Schaltklinken 100 in einem eingeschwenkten Zustand zu halten.

Der Gleitabschnitt 116 der zweiten Nockenwelle 66 ist vollständig umlaufend ausgebildet, so dass die entsprechende Schaltklinke 100 über eine vollständige Umdrehung der Nockenwellen 64, 66 eingeschwenkt bleibt. Zwischen den Nocken 116 sind vollständig umlaufende Abschnitte 121 ausgebildet, die ein Ausschwenken der jeweiligen Schaltklinke 100 über eine vollständige Umdrehung der Nockenwellen 64, 66 ermöglicht und dadurch eine entsprechende Gangstufe des zweiten Teilgetriebes 28 realisieren. Die Betätigungsabschnitte 118 sind an den Nocken 116 derart angeordnet, dass sie jeweils in Rotationsrichtung der Nockenwelle 66 eine Verbindungsrampe zwischen den umlaufenden Abschnitten 121 und dem Gleitabschnitt 120 bilden. Vorzugsweise sind die Betätigungsabschnitte 118 einer Nocke 116 jeweils in umfänglicher Richtung und in axialer Richtung versetzt zueinander angeordnet.

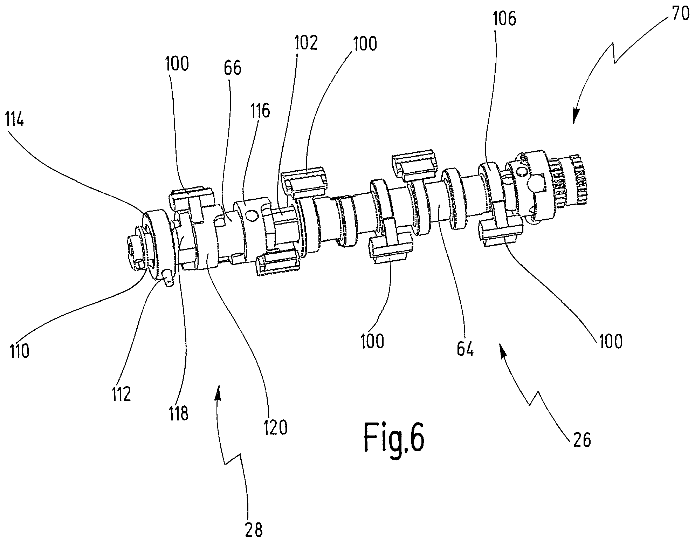

In Fig. 6 ist eine Zusammenbauzeichnung der Schaltvorrichtung 60 ohne die Welle 62 perspektivisch dargestellt. Gleiche Elemente sind mit gleichen Bezugsziffern bezeichnet, wobei hier lediglich die Besonderheiten erläutert sind.

Die Schaltklinken 100 des ersten Teilgetriebes 26 sind den Nocken 106 der ersten Nockenwelle 64 fest zugeordnet. Die zweite Nockenwelle 66 ist in einer axialen Position relativ zu den Schaltklinken 100 des zweiten Teilgetriebes 28 derart angeordnet, dass eine der hier dargestellten Schaltklinken 100 durch den Gleitabschnitt 120 eingeschwenkt ist. Die zweite Nocke 116 ist axial neben der hier abgebildeten zweiten Schaltklinke 100 angeordnet, so dass diese Schaltklinke betätigt ist, d.h. ausgeschwenkt ist und das entsprechende der Losräder drehfest mit der Welle 62 verbindet. Axial zwischen der ersten und zweiten Schaltklinke 100 ist eine weitere Schaltklinke 100 angeordnet, die in dieser Darstellung von der Nockenwelle 66 verdeckt ist und einer zweiten Gangstufe zugeordnet ist.

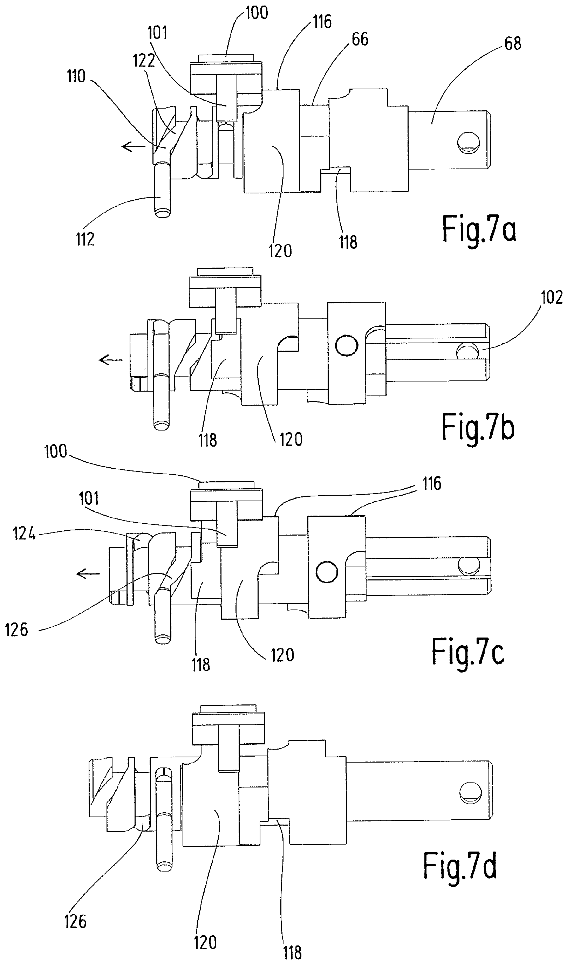

In Fig. 7a bis d ist die axial verschiebliche zweite Nockenwelle 66 in unterschiedlichen Axialpositionen zur Erläuterungen der Funktion dargestellt. Gleiche Elemente sind mit gleichen Bezugsziffern bezeichnet, wobei hier lediglich die Unterschiede und Besonderheiten erläutert sind.

Der Stift 112 greift in die Nut 110, die einen Schrägabschnitt 122 aufweist. Der Schrägabschnitt 122 bewirkt durch den in die Nut 110 eingreifenden Stift 112 bei einer Rotation der Nockenwelle 66 die Axialverschiebung der Nockenwelle 66. Der Betätigungsabschnitt 101 der dargestellten Schaltklinke 100 ist in der in Fig. 7a dargestellten Axialposition der Nockenwelle 66 nach innen ausgeschwenkt, so dass die Schaltklinke 100 mit einer Innenverzahnung des entsprechenden, nicht dargestellten Losrades in Eingriff steht.

In Fig. 7b ist die zweite Nockenwelle 66 gegenüber der Darstellung aus Fig. 7a verdreht bzw. rotiert und durch den in die Nut 110 eingreifenden Stift 112 und den Schrägabschnitt 122 in axialer Richtung gegenüber der Darstellung aus Fig. 7a verschoben. Durch eine derartige Axialverschiebung und Rotation der zweiten Nockenwelle 66 wird der Betätigungsabschnitt 118 bzw. die Rampe 118 unter den Betätigungsabschnitt 101 rotiert bzw. bewegt, wodurch die Schaltklinke 100 entsprechend eingeschwenkt und außer Eingriff der Innenverzahnung des zugeordneten Losrades gebracht wird.

In Fig. 7c ist eine weitere Rotationsposition der zweiten Nockenwelle 66 dargestellt. Die zweite Nockenwelle 66 ist in dieser Darstellung um etwa 360° gegenüber der Darstellung aus Fig. 7c verdreht. Durch einen weiteren schräg verlaufenden Abschnitt 124 der Nut 110 ist die zweite Nockenwelle 66 in eine weitere Axialposition versetzt worden. Dadurch wird bewirkt, dass der Betätigungsabschnitt 101 bei einer Rotation um 360° nicht erneut über die Rampe 118 geführt wird. Durch die Axialverschiebung der zweiten Nockenwelle 66 wird der Betätigungsabschnitt 101 über den Gleitabschnitt 120 der Nocke 116 geführt, so dass die Schaltklinke 110 über eine vollständige Umdrehung der zweiten Nockenwelle 66 eingeschwenkt bleibt.

In Fig. 7d ist eine weitere Rotationsposition der zweiten Nockenwelle 66 dargestellt. Durch einen weiteren Schrägabschnitt 126 der Nut 110 ist die zweite Nockenwelle 66 in dieser Rotationsposition gegenüber der Position aus Fig. 7c weiter axial verschoben. In dieser Position der zweiten Nockenwelle 66 ist die Schaltklinke 110 weiterhin eingeschwenkt, so dass das entsprechende Losrad auf der Welle 66 gleitet.

Durch die derart axial verschiebliche Nockenwelle 66 können die Schaltklinken 100 selektiv betätigt bzw. ausgeschwenkt werden und entsprechend außer Eingriff gebracht bzw. eingeschwenkt werden, wobei der entsprechende Schaltzustand über einen beliebigen Drehwinkel der zweiten Nockenwelle 66 beibehalten werden kann.

Die Schrägabschnitte 122, 124, 126 sind derart am Umfang der Nockenwelle 66 angeordnet, dass eine Axialverschiebung erfolgt, wenn die Schaltklinken 100 ihren Schaltzustand beibehalten. Dadurch können die Reibkräfte beim Schalten reduziert werden und eine Axialverschiebung der Nockenwelle 66 ungehindert stattfinden.

Die in Fig. 7a bis d dargestellte Schaltklinke 100 ist entsprechend einer Gangstufe des zweiten Teilgetriebes 28 zugeordnet und ist über eine erste vollständige Rotation von 360° der zweiten Nockenwelle 66 betätigt bzw. ausgeschwenkt und über die folgenden zwei Umdrehungen der zweiten Nockenwelle 66 eingeschwenkt bzw. außer Eingriff der Losräder gebracht. Dadurch können die Gangstufen des ersten Teilgetriebes 26 durch eine vollständige Umdrehung der ersten Nockenwelle 64 durchgeschaltet werden, wobei die jeweilige Gangstufe des zweiten Teilgetriebes 28 erst nach einer vollständigen Umdrehung gewechselt wird. Dadurch lassen sich alle (in diesem Fall achtzehn) Gänge der Getriebeeinheit 10 in einer Sequenz durch Rotation der beiden Nockenwellen 100 durchschalten.

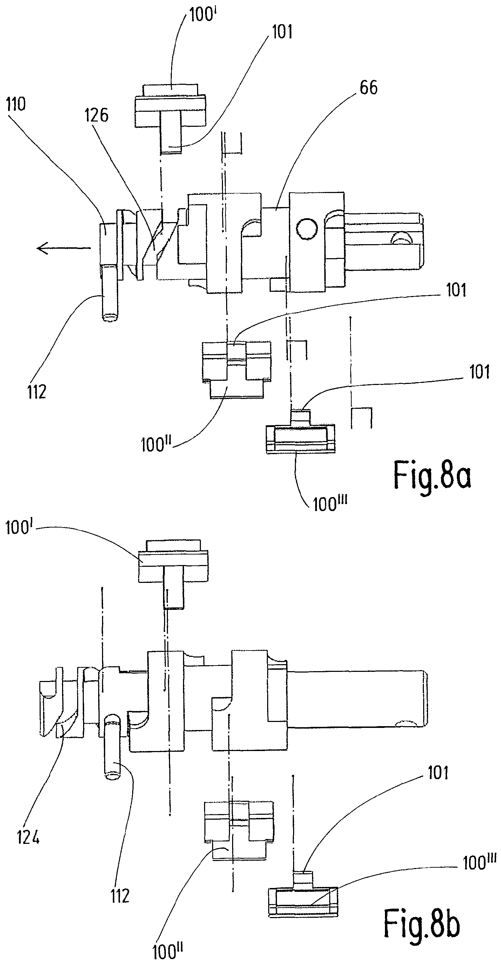

In den Fig. 8a und b sind zwei Extrempositionen der zweiten Nockenwelle 66 zusammen mit den drei zugeordneten Schaltklinken 100 schematisch dargestellt. Gleiche Elemente sind mit gleichen Bezugsziffern bezeichnet, wobei hier lediglich die Besonderheiten erläutert sind.

In Fig. 8a ist eine Anfangsposition der zweiten Nockenwelle 66 dargestellt, die etwa dem ersten Gang der Getriebeeinheit 10 entspricht. In dieser Stellung greift der Stift 112 in einen axial äußersten Abschnitt der Nut 110 ein. Die drei Schaltklinken 100 sind entsprechend ihrer Position in der jeweiligen Ausnehmung 98 der Welle 62 schematisch dargestellt. Die drei Schaltklinken sind in Fig. 8a entsprechend ihrer Zuordnung zu den Gangstufen des zweiten Teilgetriebes 28 mit 100', 100" und 100"' bezeichnet. Die Schaltklinken 100 sind entsprechend ihrer Position in der jeweiligen Ausnehmung 98 der Welle 62 positioniert. In der Axialposition in Fig. 8a sind die Nocken 116 an den Axialpositionen der Schaltklinken 100", 100'" angeordnet, so dass durch die entsprechenden Gleitabschnitte 120 die Schaltklinken 100", 100'" eingeschwenkt bzw. außer Eingriff der jeweiligen Losräder gebracht sind. Die Schaltklinke 100' ist in dieser Stellung der zweiten Nockenwelle 66 betätigt bzw. ausgeschwenkt und verbindet demnach die Welle 62 mit dem entsprechenden Losrad. In dieser Stellung der zweiten Nockenwelle 66 ist folglich die erste Gangstufe des zweiten Teilgetriebes 28 eingelegt.

In Fig. 8b ist eine weitere Extremposition der zweiten Nockenwelle 66 dargestellt, die etwa dem 18. Gang der Getriebeeinheit 10 entspricht. Der Stift greift in einen axial inneren Abschnitt der Nut 110 ein, wodurch die zweite Nockenwelle 66 in einer äußerst linken Position angeordnet ist. In dieser Position sind die Schaltklinken 100' und 100" durch die Gleitabschnitte 120 eingeschwenkt, wohingegen die Schaltklinke 100'" ausgeschwenkt ist. In dieser Position der zweiten Nockenwelle 66 ist eine dritte Gangstufe des zweiten Teilgetriebes 28 eingelegt.

Demnach ist wenigstens eine der Nocken 116 je nach Axialposition der Nockenwelle 66 den Schaltklinken 100", 100'" von unterschiedlichen der Losräder 48-50 zugeordnet, um diese entsprechend zu betätigen oder außer Eingriff der Losräder zu bringen.

Durch die axial verschiebliche zweite Nockenwelle 66 ist es möglich, durch Rotation der ersten Nockenwelle 64 die Gangstufen des ersten Teilgetriebes 26 vollständig durchzuschalten und nach einer vollständigen Umdrehung der Nockenwellen 64, 66 ein Umschalten des zweiten Teilgetriebes zu bewirken.

In einer alternativen erfindungsgemäßen Ausführungsform ist die Nockenwelle 66 als einzige Nockenwelle in der Welle 62 gelagert, wobei eine Rotation der Nockenwelle 66 relativ zu der Welle 62 die Axialverschiebung bewirkt und entsprechend die Schaltmittel 100 betätigt.

In einer weiteren Ausführungsform sind beide Nockenwellen 64, 66 axial verschieblich ausgebildet, wobei die Axialverschiebung durch eine Drehbewegung der Nockenwellen 64, 66 relativ zu der Welle 62 bewirkt wird.

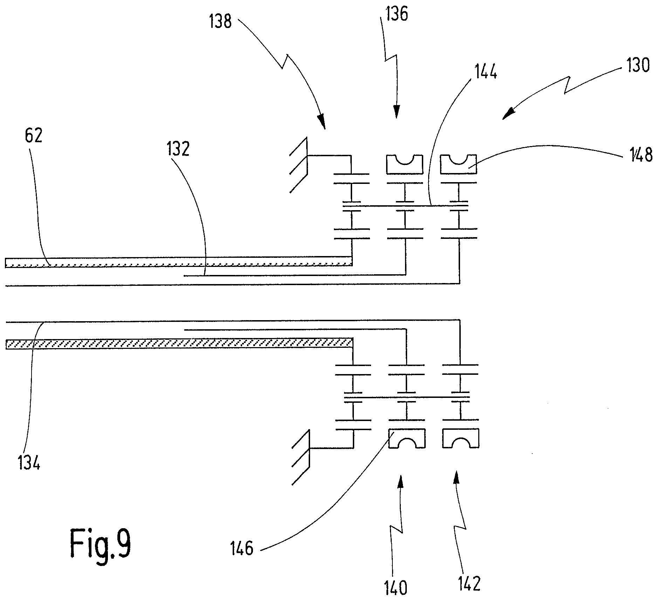

In Fig. 9 ist eine Schaltvorrichtung mit zwei unabhängigen Nockenwellen dargestellt und allgemein mit 130 bezeichnet.

Die Schaltvorrichtung 130 weist die Welle 62 auf, an der eine Mehrzahl von Losrädern der beiden Teilgetriebe 26, 28 gelagert sind. Den Teilgetrieben 26, 28 ist jeweils eine Nockenwelle 132, 134 zugeordnet, die dazu ausgebildet sind, die hier nicht dargestellten Schaltmittel zu betätigen, um die Losräder selektiv mit der Welle 62 drehfest zu verbinden und so unterschiedliche Gangstufen der Getriebeeinheit 10 zu realisieren. An einem axialen Ende der Welle 62 ist ein Drehzahlüberlagerungsgetriebe 136 angeordnet, das sowohl mit der Welle 62 als auch jeweils mit den Nockenwellen 132, 134 verbunden ist. Das Drehzahlüberlagerungsgetriebe 136 ist koaxial zu der Welle 62 angeordnet. Das Drehzahlüberlagerungsgetriebe 136 weist eine Übertragungsstufe 138 und zwei Steuerstufen 140, 142 auf. Die Übertragungsstufe 138 ist mit der Welle 62 verbunden und die Steuerstufen 140, 142 sind jeweils mit einer der Nockenwellen 132, 134 verbunden. Die Übertragungsstufe 138 ist durch ein erstes Planetengetriebe 138 gebildet. Die Steuerstufen 140, 142 sind jeweils durch ein Planetengetriebe 140, 142 gebildet. Die Planetengetriebe 138, 140, 142 sind identisch ausgebildet wie die entsprechenden Planetengetriebe aus Fig. 3. Die Planetenräder der einzelnen Planetengetriebe 138, 140, 142 sind mittels eines gemeinsamen Planetenträgers 144 miteinander verbunden. Das Planetengetriebe der Übertragungsstufe 138 ist mit der Welle 62 und mit einem nicht dargestellten Getriebegehäuse verbunden. Die Steuerstufen 140, 142 weisen jeweils eine Zugscheibe 146, 148 auf, die mit den jeweiligen Hohlrädern verbunden sind.

Durch die Verbindung der Planetenräder der Planetengetriebe 138, 140, 142 werden die beiden Nockenwellen 132, 134 bei stillstehenden Zugscheiben 146, 148 synchron mit der Welle 62 rotiert. Sofern eine der Zugscheiben 146, 148 rotiert wird, wird die Rotation bzw. der entsprechende Verdrehwinkel auf die jeweilige der Nockenwellen 132, 134 übertragen. Dadurch können die Nockenwellen 132, 134 unabhängig voneinander relativ zu der Welle 62 rotiert und die Gangstufen der entsprechenden Teilgetriebe 26, 28 unabhängig voneinander geschaltet werden. Dadurch ist ferner eine axial kompakte Bauform möglich, da lediglich an einem axialen Ende das Planetengetriebe 138, 140, 142 angeordnet ist.

Die Schaltvorrichtung 130 weist wenigstens zwei der Steuerstufen 140, 142 auf. In einer besonderen Ausführungsform weist die Schaltvorrichtung 130 drei oder mehr der Steuerstufen 140, 142 auf, um separate Schaltmittel zu betätigen.

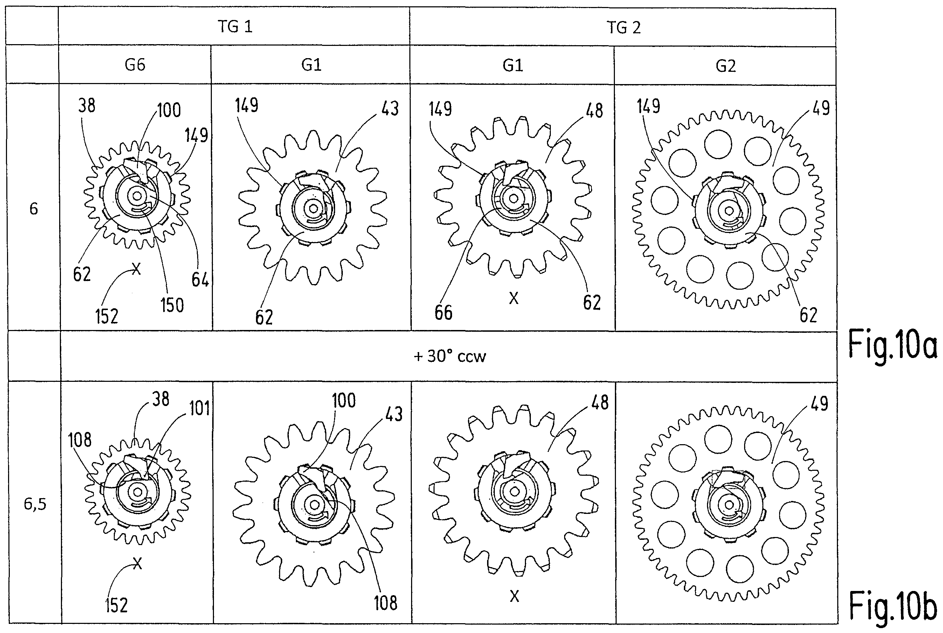

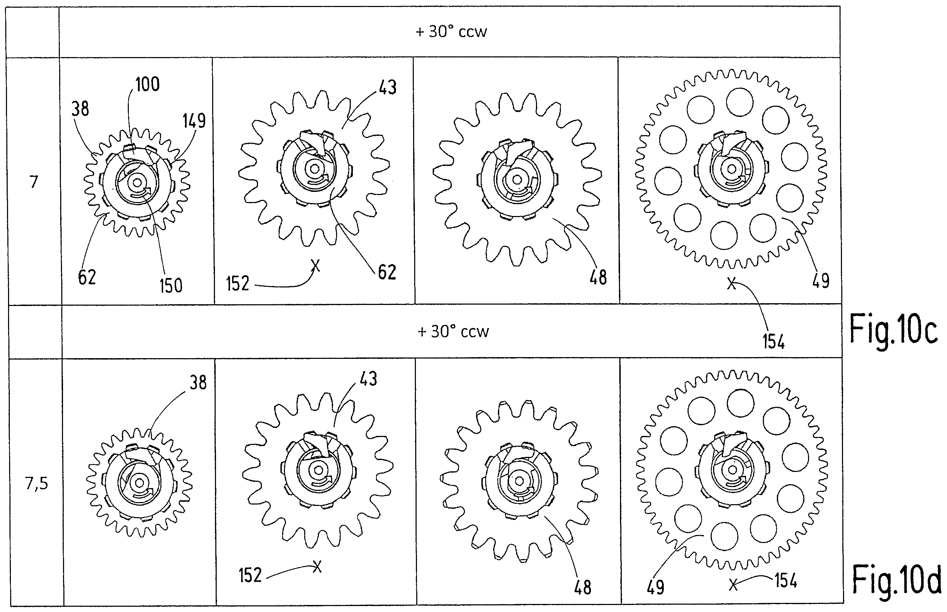

In Fig. 10a bis d sind unterschiedliche Losräder des ersten und zweiten Teilgetriebes 26, 28 mit der Schaltvorrichtung 60 aus Fig. 3 in axialer Blickrichtung schematisch dargestellt, um die erfindungsgemäße Synchronisation der beiden Teilgetriebe 26, 28 zu erläutern.

Grundsätzlich besteht das Problem bei mechanisch in Reihe geschalteten Teilgetrieben darin, dass beim Umschalten über den höchsten Gang des ersten Teilgetriebes 26 das erste Teilgetriebe in die niedrigste Gangstufe geschaltet wird und gleichzeitig eine Gangstufe in dem zweiten Teilgetriebe 28 in eine höhere Gangstufe geschaltet wird. Sofern die tatsächlichen Lastwechsel bzw. Schaltzeitpunkte der beiden Teilgetriebe 26, 28 nicht zeitgleich erfolgen, wird die Gangstufe der gesamten Getriebeeinheit kurzzeitig entweder in einen sehr niedrigen oder aber in einen sehr hohen Gang geschaltet.

In dem vorliegenden Beispiel weist das erste Teilgetriebe 26 sechs Gangstufen und das zweite Teilgetriebe 28 drei Gangstufen auf. Wenn vom sechsten Gang der Getriebeeinheit 10 in den siebten Gang geschaltet wird, wird in dem ersten Teilgetriebe 26 von der sechsten Gangstufe in die erste Gangstufe und gleichzeitig in dem zweiten Teilgetriebe 28 von der ersten Gangstufe in die zweite Gangstufe geschaltet. Analog dazu wird beim Schalten vom 12. in den 13. Gang im zweiten Teilgetriebe 28 von der zweiten in die dritte Gangstufe geschaltet. Sofern die beiden Teilgetriebe 26, 28 nicht vollständig gleichzeitig schalten, wird kurzzeitig entweder vom sechsten (oder zwölften) Gang in den ersten (oder siebten) Gang geschaltet, sofern das erste Teilgetriebe 26 zuerst geschaltet wird oder aber vom sechsten (oder zwölften) Gang in den zwölften (oder achtzehnten) Gang, sofern das zweite Teilgetriebe 28 zuerst geschaltet wird.

In den Fig. 10a bis d sind die Losräder 38 und 43 der sechsten und der ersten Gangstufe des ersten Teilgetriebes 26 und die Losräder 48 und 49 der ersten und zweiten Gangstufe des zweiten Teilgetriebes 28 in axialer Blickrichtung zu vier Zeitpunkten eines Schaltvorgangs vom sechsten in den siebten Gang der Getriebeeinheit 10 dargestellt.

Die Losräder weisen jeweils eine Innenverzahnung 149 auf, in die eine der Freilaufklinken 100 eingreift, um die Losräder mit der Welle 62 drehfest zu verbinden. Sofern einer der Betätigungsabschnitte 108, 118 der Nockenwellen 64, 66 unterhalb einer der Betätigungsabschnitte 101 der Schaltklinken 100 angeordnet ist, schwenkt die jeweilige Schaltklinke 100 aus und greift in die Innenverzahnung 149 der Losräder, um diese mit der Welle 62 drehfest zu verbinden. Sofern ein Gleitabschnitt 106, 120 der Nockenwellen 64, 66 unterhalb der Betätigungsabschnitte 101 angeordnet ist, ist die jeweilige Schaltklinke 100 eingeschwenkt und das entsprechende Losrad gleitet auf der Welle 62. In Fig. 10a ist der sechste Gang der Getriebeeinheit eingelegt. Dabei ist die sechste Gangstufe des ersten Teilgetriebes 26 eingelegt und die erste Gangstufe des zweiten Teilgetriebes 28 eingelegt. Dabei ist das der sechsten Gangstufe zugeordnete Losrad 38 mit der Welle 62 drehfest verbunden, wobei das der ersten Gangstufe zugeordnete Losrad 43 auf der Welle 62 gleitet. Im zweiten Teilgetriebe 28 ist das der ersten Gangstufe zugeordnete Losrad 48 drehfest mit der Welle 62 verbunden, wobei das der zweiten Gangstufe zugeordnete Losrad 49 auf der Welle 62 gleitet.

Um aus dem so eingelegten Gang der Getriebeeinheit 10 in den siebten Gang zu schalten, werden die drehfest verbundenen Nockenwellen 64, 66 in Richtung eines Pfeils 150 gedreht, bis ein sog. Zwischenzustand erreicht ist, der in Fig. 10b gezeigt ist.

In dem Zwischenzustand sind beide Schaltklinken der ersten Gangstufe und der sechsten Gangstufe des ersten Teilgetriebes 26 betätigt bzw. ausgeschwenkt. In diesem Zustand ist die sechste Gangstufe eingelegt, wie es durch ein Kreuz 152 angedeutet ist. In diesem Zwischenzustand bleibt die sechste Gangstufe eingelegt, da hier das Losrad 38 schneller läuft als das Losrad 43, so dass das Losrad 43 über die Schaltklinke 100 hinweg gleitet. Die erste Nockenwelle 64 wird in Richtung des Pfeils 150 rotiert, bis an dem Betätigungsabschnitt 101 der Schaltklinke der sechsten Gangstufe anliegt und eine entsprechende Kraft auf die Schaltklinke 100 ausübt. In dieser Rotationsposition der Nockenwellen 64, 66 ist die Schaltklinke 100 der ersten Gangstufe des zweiten Teilgetriebes 28 betätigt bzw. ausgeschwenkt und die Schaltklinke 100 der zweiten Gangstufe des zweiten Teilgetriebes 28 eingeschwenkt. Sofern eine Antriebsleistung der Getriebeeinheit 10 reduziert wird und die Kraft, die von der Nockenwelle 64 auf den Betätigungsabschnitt 101 ausgeübt wird, ausreicht, um die Schaltklinke 100 außer Eingriff des Losrades 38 zu bringen, schwenkt diese Schaltklinke 100 ein und gleichzeitig wird das Losrad 43 drehfest mit der Welle 62 verbunden und dadurch die erste Gangstufe des ersten Teilgetriebes 26 eingelegt. Dadurch, dass die Nockenwelle 64 gegenüber der Schaltklinke 100 des Losrades 38 vorgespannt ist, wird die Nockenwelle 64 beim Einschwenken der Schaltklinke 100 weiter rotiert, so dass der Zwischenzustand aus Fig. 10b aufgehoben wird, wie es in Fig. 10c gezeigt ist. In diesem Zustand ist im ersten Teilgetriebe die erste Gangstufe eingelegt, wie es durch das Kreuz 152 gezeigt ist. Gleichzeitig ist die Nockenwelle 66 zusammen mit der Nockenwelle 64 um einen Drehwinkel von etwa 30° weiter rotiert, so dass die Schaltklinke 100 des Losrades 49 ausgeschwenkt wird. Da im zweiten Teilgetriebe die höhere zweite Gangstufe die schneller laufende Gangstufe bildet, wird hier unmittelbar mit dem Ausschwenken der Schaltklinke 100 die zweite Gangstufe eingelegt, wie es durch ein Kreuz 154 gezeigt ist. Folglich ist zu diesem Zeitpunkt im ersten Teilgetriebe 26 die erste Gangstufe und im zweiten Teilgetriebe 28 die zweite Gangstufe eingelegt, so dass der siebte Gang der Getriebeeinheit 10 eingelegt ist.

Dadurch, dass die Schaltklinke 100 des Losrads 38 die Nockenwellen zunächst am Weiterdrehen hindert und die Schaltklinke 100 des Losrades 49 beim Weiterdrehen der Nockenwellen 64, 66 durch die höhere Rotationsgeschwindigkeit sofort das Losrad 49 mit der Welle 62 drehfest verbindet und gleichzeitig die Schaltklinke 100 des Losrades 43 dieses drehfest mit der Welle 62 verbindet, erfolgt ein zeitgleiches Umschalten in beiden Teilgetrieben 26, 28. Mit anderen Worten lässt der Lastwechsel im ersten Teilgetriebe ein Weiterdrehen beider Nockenwellen 64, 66 zu, wodurch unmittelbar die Gangstufen des zweiten Teilgetriebes umgeschaltet werden. Dadurch sind die beiden Teilgetriebe 26, 28 beim Umschalten vom sechsten in den siebten Gang der Getriebeeinheit 10 vollständig synchronisiert.

In diesem Schaltzustand aus Fig. 10c befindet sich das zweite Teilgetriebe 28 in einem Zwischenzustand, bei dem beide zugehörigen Schaltklinken ausgeschwenkt sind. Da das Losrad 49 das schnell laufende Rad ist, gleitet das Losrad 48 über die Welle 62.

Sofern vom siebten in den achten Gang geschaltet wird, wird nun zunächst in einen Zwischenzustand des ersten Teilgetriebes geschaltet, indem die Schaltklinken 100 der ersten und zweiten Gangstufe betätigt sind, wodurch die Schaltklinke 100 des Losrades 48 der ersten Gangstufe des zweiten Teilgetriebes 28 eingeschwenkt wird.

Bei einem Schaltvorgang vom siebten Gang der Getriebeeinheit 10 in den sechsten Gang wird folglich das erste Teilgetriebe 26 von der ersten Gangstufe in die sechste Gangstufe und gleichzeitig das zweite Teilgetriebe von der zweiten Gangstufe in die erste Gangstufe geschaltet. In umgekehrter Weise zum Hochschalten wird dabei das zweite Teilgetriebe 28 zunächst in einen Zwischenzustand geschaltet, indem beide entsprechenden Schaltklinken 100 betätigt bzw. ausgeschwenkt sind. Die Nockenwelle 66 wird entsprechend gegen eine der Schaltklinken 100 vorgespannt und bei einem Lastwechsel freigegeben, so dass die Nockenwelle 66 weiter dreht und einen Zwischenzustand in dem ersten Teilgetriebe 26 bewirkt. In diesem Zwischenzustand wird durch die schaltbaren Freiläufe 100 und die Rotationsgeschwindigkeiten der entsprechenden Losräder 38, 43 sofort geschaltet bzw. der Lastwechsel durchgeführt. Dadurch kann beim Herunterschalten der Getriebeeinheit 10 ebenfalls synchron und zeitgleich in beiden Teilgetrieben 26, 28 geschaltet werden.

Es versteht sich, dass eine derartige Synchronisation der beiden Teilgetriebe 26, 28 sowohl auf die Schaltvorrichtung 60 aus Fig. 3 als auch auf andere Schaltvorrichtungen wie z.B. ausschließlich drehbare Nockenwellen oder ausschließlich axial verschiebliche Nockenwellen anwendbar ist. Weiterhin kann das zweite Teilgetriebe auch als schaltbares Planetengetriebe oder dergleichen ausgebildet sein.

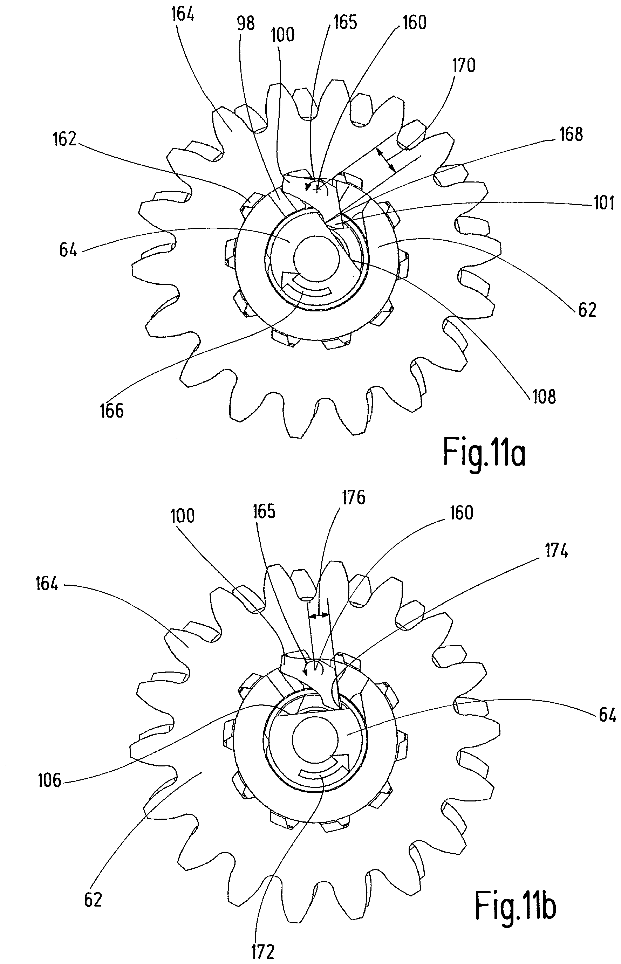

In Fig. 11a und b ist die Funktionsweise der Schaltklinke 100 näher erläutert. Die Schaltklinke 100 ist in einer der Ausnehmungen 98 um eine Achse 160 drehbar gelagert. Die Schaltklinke 100 greift in eine Innenverzahnung 162 eines Losrades 164 ein, um das Losrad 164 drehfest mit der Welle 62 zu verbinden. Die Nockenwelle 62 weist den Betätigungsabschnitt 108 auf, so dass die Schaltklinke 100 in einer Einschwenkdrehung um die Achse 160 einschwenkt, wie es bei 165 gezeigt ist. Die Nockenwelle 64 wird in Richtung eines Pfeils 166 entgegen der Ausschwenkrichtung 165 der Schaltklinke 100 rotiert, so dass der Betätigungsabschnitt 108 den Betätigungsabschnitt 101 an einem ersten Kontaktpunkt 168 berührt. Durch die Rotation der Nockenwelle 64 wird auf die Schaltklinke 100 ein Drehmoment ausgeübt, das die Schaltklinke 100 einschwenkt. Die Größe des Drehmoments entspricht der Kraft, die auf den Kontaktpunkt 168 ausgeübt wird und einem Hebelarm 170, der durch den Abstand 170 des Kontaktpunktes 168 von der Drehachse 160 gebildet ist.

In Fig. 11b ist eine Rotationsrichtung der Nockenwelle 64 in der entgegengesetzten Richtung dargestellt und durch einen Pfeil 172 angedeutet. Diese Drehrichtung 172 ist identisch mit der Ausschwenkrichtung 165 der Schaltklinke 100. In dieser Drehrichtung berührt der Betätigungsabschnitt 106 den Betätigungsabschnitt 101 an einem zweiten Kontaktpunkt 174. Die Rotation der Nockenwelle 64 übt ein Drehmoment auf die Schaltklinke 100 aus, das der Kraft entspricht, die auf den Kontaktpunkt 174 ausgeübt wird und einem zweiten Hebelarm 176, der durch einen Abstand 176 zwischen dem zweiten Kontaktpunkt und der Drehachse 160 gebildet ist.

Der erste Hebelarm 170 ist folglich größer als der zweite Hebelarm 176, so dass bei einer Rotation der Nockenwelle 64 entgegen einer Einschwenkrichtung 165 der Schaltklinke 100 ein größeres Moment auf die Schaltklinke 100 ausgeübt wird.

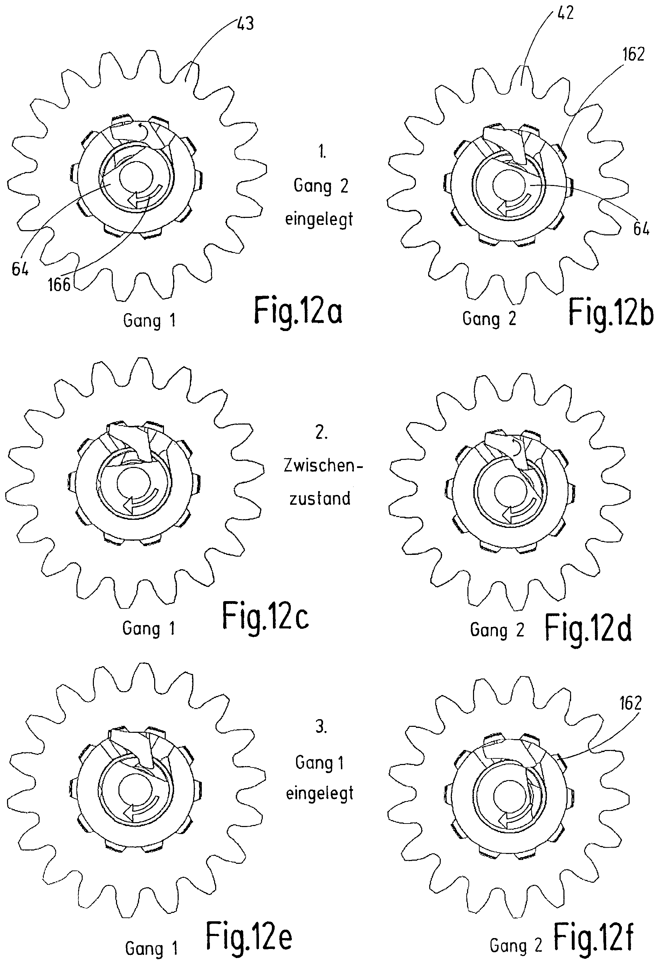

Beim Schalten von einer höheren Gangstufe in eine niedrigere Gangstufe bleibt die Schaltklinke 100 durch die übertragene Last und durch das Schalten vom Schnellen ins Langsame ausgeschwenkt, so dass üblicherweise ohne eine Lastreduzierung ein Umschalten nicht möglich ist. Dadurch, dass bei einer Rotationsrichtung der Nockenwelle 64 entgegen der Einschwenkrichtung 165 ein größeres Moment auf die Schaltklinke 100 ausgeübt wird, ermöglicht diese Rotation ein Herunterschalten unter Last bzw. unter einer höheren Last als bei der entgegengesetzten Rotationsrichtung der Nockenwelle 64, wie es in den Fig. 12a bis f näher erläutert ist.

In den Fig. 12a bis f sind die Losräder 42, 43 des ersten Gangs und des zweiten Gangs in einer axialen Blickrichtung schematisch dargestellt, um ein Umschalten von dem zweiten Gang in den ersten Gang zu erläutern. In den Fig. 12a und b ist der zweite Gang eingelegt, wobei die Schaltklinke 100 des zweiten Gangs ausgeschwenkt ist und die Schaltklinke 100 des ersten Gangs eingeschwenkt ist. Durch Weiterdrehen der Nockenwelle 64 in der Pfeilrichtung 166 wird ein Zwischenzustand erreicht, in dem die Schaltklinken der beiden Gänge 1 und 2 betätigt sind. In diesem Zwischenzustand ist das schneller laufende Losrad 42, das Losrad 42 des zweiten Gangs mit der Welle 62 drehfest verbunden, wobei das Losrad 43 des ersten Gangs auf der Welle 62 gleitet. In dem Zustand in Fig. 12d wird eine Kraft auf die Schaltklinke 100 ausgeübt, um die Schaltklinke 100 einzuschwenken, wie es bereits in Fig. 11a dargestellt ist. Dadurch wird ein Einschwenken der Schaltklinke 100 bewirkt, wie es in Fig. 12f dargestellt ist. Dadurch greift die Schaltklinke 100 des ersten Gangs in die Innenverzahnung 162 des Losrades 42, so dass der erste Gang eingelegt ist.

Durch die Rotation der Nockenwelle 64 beim Schalten von einer höheren in eine niedrigere Gangstufe entgegen der Einschwenkrichtung 165 der Schaltklinken 100 kann somit ein größeres Drehmoment auf die Schaltklinke 100 ausgeübt werden, wodurch auch unter Last bzw. Teillast die Schaltklinke 100 des jeweils höheren Gangs außer Eingriff der Innenverzahnung 162 gebracht werden kann. Dadurch kann auch unter Last heruntergeschaltet werden.

## Patentansprüche

1. Getriebeeinheit (10) mit einer Schaltvorrichtung (60), insbesondere für ein mit Muskelkraft angetriebenes Fahrzeug, mit einem ersten Teilgetriebe (26) und einem zweiten Teilgetriebe (28), die zur Kraftübertragung in Reihe geschaltet sind, wobei das erste Teilgetriebe (26) eine Welle (62) aufweist, die als Hohlwelle (62) ausgebildet ist, an der eine Mehrzahl von Losrädern (38-43) gelagert ist, die mit einer entsprechenden Mehrzahl von Zahnrädern (30-35) Radpaare des ersten Teilgetriebes (26) bilden, wobei die Losräder (38-43) mittels Schaltmitteln (100) mit der Welle (62) verbindbar sind, um unterschiedliche Gangstufen des ersten Teilgetriebes (26) zu realisieren, wobei die Schaltmittel (100) mittels einer in der Welle (62) angeordneten Nockenwelle (64) betätigbar sind, wobei die Schaltmittel (100) des ersten Teilgetriebes (26) als schaltbare Freiläufe (100) ausgebildet sind, und wobei das zweite Teilgetriebe (28) eine Mehrzahl von schaltbaren Gangstufen aufweist, **dadurch gekennzeichnet, dass** die Nockenwelle (64) derart ausgebildet ist, dass beim Schalten von einer höchsten der Gangstufen des ersten Teilgetriebes (26) in eine niedrigste der Gangstufen des ersten Teilgetriebes (26) wenigstens zeitweise die Freiläufe (100) der beiden Gangstufen betätigt sind und ein Lastwechsel zwischen den entsprechenden Freiläufen (100) einen Schaltvorgang des zweiten Teilgetriebes (28) in eine höhere der Gangstufen zulässt.

2. Getriebeeinheit (10) mit einer Schaltvorrichtung (60), insbesondere für ein mit Muskelkraft angetriebenes Fahrzeug, mit einem ersten Teilgetriebe (26) und einem zweiten Teilgetriebe (28), die zur Kraftübertragung in Reihe geschaltet sind, wobei das zweite Teilgetriebe (28) eine Welle (62) aufweist, die als Hohlwelle (62) ausgebildet ist, an der eine Mehrzahl von Losrädern (48-50) gelagert ist, die mit einer entsprechenden Mehrzahl von Zahnrädern (52-54) Radpaare des zweiten Teilgetriebes (28) bilden, wobei die Losräder (48-50) mittels Schaltmitteln (100) mit der Welle (62) verbindbar sind, um unterschiedliche Gangstufen des zweiten Teilgetriebes (28) zu realisieren, wobei die Schaltmittel (100) mittels einer in der Welle (62) angeordneten Nockenwelle (66) betätigbar sind, wobei die Schaltmittel (100) des zweiten Teilgetriebes (28) als schaltbare Freiläufe (100) ausgebildet sind, und wobei das erste Teilgetriebe (26) eine Mehrzahl von schaltbaren Gangstufen aufweist, **dadurch gekennzeichnet, dass** die Nockenwelle (66) derart ausgebildet ist, dass beim Schalten von einer höheren der Gangstufen des zweiten Teilgetriebes (28) in eine niedrigere der Gangstufen des zweiten Teilgetriebes (28) wenigstens zeitweise die Freiläufe (100) der beiden Gangstufen betätigt sind und ein Lastwechsel zwischen den entsprechenden Freiläufen (100) einen Schaltvorgang des ersten Teilgetriebes (26) von einer höchsten der Gangstufen des ersten Teilgetriebes (26) in eine niedrigste der Gangstufen des ersten Teilgetriebes (26) zulässt.

3. Getriebeeinheit nach Anspruch 1 oder 2, **dadurch gekennzeichnet, dass** der Lastwechsel eine Bewegung der Nockenwelle (64, 66) zulässt, die den Schaltvorgang in dem jeweils anderen der Teilgetriebe (26, 28) einleitet.

4. Getriebeeinheit nach einem der Ansprüche 1 bis 3, **dadurch gekennzeichnet, dass** die Nockenwelle (64, 66) in einem Zwischenzustand, in dem die Freiläufe (100) der beiden Gangstufen des ersten Teilgetriebes (26) bzw. des zweiten Teilgetriebes (28) gleichzeitig betätigt sind, gegen den entsprechenden Freilauf (100) vorgespannt ist und bei dem Lastwechsel freigegeben wird.

5. Getriebeeinheit nach einem der Ansprüche 1 bis 4, **dadurch gekennzeichnet, dass** das zweite Teilgetriebe (28) durch eine Mehrzahl von an der Welle (62) gelagerten Losräder (48-50) gebildet ist, die mit einer entsprechenden Mehrzahl von Zahnrädern (52-54) Radpaare des zweiten Teilgetriebes (28) bilden, wobei das zweite Teilgetriebe (28) eine in der Welle (62) drehbare und/oder axial verschiebliche Nockenwelle (66) aufweist, die dazu ausgebildet ist, bei dem Lastwechsel einen Gangwechsel in dem zweiten Teilgetriebe (28) durchzuführen und insbesondere Freiläufe (100) von zwei aufeinanderfolgenden Gangstufen gleichzeitig zu betätigen.

6. Getriebeeinheit nach einem der Ansprüche 1 bis 5, **dadurch gekennzeichnet, dass** die Freiläufe (100) verschwenkbare Freilaufklinken (100) aufweisen, die in dem Zwischenzustand vor dem Lastwechsel die Rotation der Nockenwelle (64) blockieren.

## Claims

1. Transmission unit (10) with a shift device (60), in particular for a vehicle driven by muscle power, with a first partial transmission (26) and a second partial transmission (28) which are connected in series for power transmission, the first partial transmission (26) having a shaft (62) which is designed as a hollow shaft (62), on which a plurality of idler wheels (38-43) is mounted which, together with a corresponding plurality of gear wheels (30-35), form wheel pairs of the first sub-transmission (26), the idler wheels (38-43) being connectable to the shaft (62) by means of shift means (100) in order to implement different gear steps of the first sub-transmission (26), wherein the shifting means (100) can be actuated by means of a camshaft (64) arranged in the shaft (62), wherein the shifting means (100) of the first partial transmission (26) are designed as shiftable freewheels (100), and wherein the second partial transmission (28) has a plurality of shiftable gear steps, **characterized in that** the camshaft (64) is designed in such a way, **in that**, when shifting from a highest of the gear steps of the first sub-transmission (26) into a lowest of the gear steps of the first sub-transmission (26), the freewheels (100) of the two gear steps are actuated at least temporarily and a load change between the corresponding freewheels (100) permits a shifting operation of the second sub-transmission (28) into a higher one of the gear steps.

2. Transmission unit (10) with a shift device (60), in particular for a vehicle driven by muscle power, with a first partial transmission (26) and a second partial transmission (28) which are connected in series for power transmission, the second partial transmission (28) having a shaft (62) which is designed as a hollow shaft (62) on which a plurality of idler gears (48-50) are mounted, which, together with a corresponding plurality of gearwheels (52-54), form wheel pairs of the second sub-transmission (28), the idler wheels (48-50) being connectable to the shaft (62) by means of shifting means (100) in order to realize different gear ratios of the second sub-transmission (28), the shifting means (100) being actuatable by means of a camshaft (66) arranged in the shaft (62), wherein the shifting means (100) of the second partial transmission (28) are designed as shiftable freewheels (100), and wherein the first partial transmission (26) has a plurality of shiftable gear steps, **characterized in that** the camshaft (66) is designed in such a way, **in that** when shifting from a higher one of the gear steps of the second partial transmission (28) into a lower one of the gear steps of the second partial transmission (28), the freewheels (100) of the two gear steps are actuated at least temporarily, and a load change between the corresponding freewheels (100) permits a shifting operation of the first partial transmission (26) from a highest one of the gear steps of the first partial transmission (26) into a lowest one of the gear steps of the first partial transmission (26).

3. Transmission unit according to claim 1 or 2, **characterized in that** the load change permits a movement of the camshaft (64, 66), which initiates the shift operation in the respective other of the sub-transmissions (26, 28).

4. Transmission unit according to one of claims 1 to 3, **characterized in that** the camshaft (64, 66) is preloaded against the corresponding freewheel (100) in an intermediate state in which the freewheels (100) of the two gear steps of the first sub-transmission (26) or of the second sub-transmission (28) are actuated simultaneously, and is released during the load change.

5. Transmission unit according to any one of claims 1 to 4, **characterized in that** the second sub-transmission (28) is formed by a plurality of idler gears (48-50) mounted on the shaft (62), which, together with a corresponding plurality of gears (52-54), form pairs of wheels of the second sub-transmission (28), wherein the second partial transmission (28) has a camshaft (66) which is rotatable and/or axially displaceable in the shaft (62) and is designed to carry out a gear change in the second partial transmission (28) during the load change and in particular to actuate freewheels (100) of two successive gear steps simultaneously.

6. Transmission unit according to one of claims 1 to 5, **characterized in that** the freewheels (100) have pivotable freewheel pawls (100) which, in the intermediate state before the load change, block the rotation of the camshaft (64).

## Revendications

1. Unité de transmission (10) dotée d'un dispositif de changement de vitesse (60), en particulier pour un véhicule entraîné par force musculaire, doté d'une première transmission partielle (26) et d'une deuxième transmission partielle (28), lesquelles sont configurées en série pour la transmission de force, dans laquelle la première transmission partielle (26) comporte un arbre (62), lequel est réalisé comme arbre creux (62), sur lequel sont disposés une pluralité de pignons libres (38-43), lesquels forment avec une pluralité correspondante de roues dentées (30-35) les paires de roues de la première transmission partielle (26), dans laquelle les pignons libres (38-43) peuvent être reliés à l'arbre (62) au moyen de moyens de commutation (100), afin de réaliser les différents rapports de la première transmission partielle (26), dans laquelle les moyens de commutation (100) sont actionnables au moyen d'un arbre à cames (64) agencé dans l'arbre (62), dans laquelle les moyens de commutation (100) de la première transmission partielle (26) sont réalisés comme roulements libres commutables (100), et dans laquelle la deuxième transmission partielle (28) comporte une pluralité de rapports commutables, **caractérisée en ce que** l'arbre à cames (64) est réalisé de sorte que lors de la commutation d'un rapport le plus élevé de la première transmission partielle (26) à un rapport le plus bas de la première transmission partielle (26) les roulements libres (100) des deux rapports sont actionnés au moins temporairement et un changement de charge entre les roulements libres (100) correspondants autorise une opération de commutation de la deuxième transmission partielle (28) dans un des rapports supérieurs.

2. Unité de transmission (10) dotée d'un dispositif de changement de vitesse (60), en particulier pour un véhicule entraîné par force musculaire, doté d'une première transmission partielle (26) et d'une deuxième transmission partielle (28), lesquelles sont configurées en série pour la transmission de force, dans laquelle la deuxième transmission partielle (28) comporte un arbre (62), lequel est réalisé comme arbre creux (62), sur lequel sont disposés une pluralité de pignons libres (48-50), lesquels forment avec une pluralité correspondante de roues dentées (52-54) les paires de roues de la deuxième transmission partielle (28), dans laquelle les pignons libres (48-50) peuvent être reliés à l'arbre (62) au moyen de moyens de commutation (100), afin de réaliser les différents rapports de la deuxième transmission partielle (28), dans laquelle les moyens de commutation (100) sont actionnables au moyen d'un arbre à cames (66) agencé dans l'arbre (62), dans laquelle les moyens de commutation (100) de la deuxième transmission partielle (28) sont réalisés comme roulements libres commutables (100), et dans laquelle la première transmission partielle (26) comporte une pluralité de rapports commutables, **caractérisée en ce que** l'arbre à cames (66) est réalisé de sorte que lors de la commutation d'un rapport supérieur de la deuxième transmission partielle (28) à un rapport inférieur de la deuxième transmission partielle (28) les roulements libres (100) des deux rapports sont actionnés au moins temporairement et un changement de charge entre les roulements libres (100) correspondants autorise une opération de commutation de la première transmission partielle (26) d'un rapport le plus élevé de la première transmission partielle (26) à un rapport le plus bas de la première transmission partielle (26).

3. Unité de transmission selon la revendication 1 ou 2, **caractérisée en ce que** le changement de charge autorise un mouvement de l'arbre à cames (64, 66), lequel entame l'opération de commutation vers l'autre transmission partielle (26, 28) respective.

4. Unité de transmission selon l'une des revendications 1 à 3, **caractérisée en ce que** l'arbre à cames (64, 66) est, dans un état intermédiaire où les roulements libres (100) des deux rapports de la première transmission partielle (26) ou de la deuxième transmission partielle (28) sont actionnés simultanément, précontraint contre le roulement libre (100) correspondant et est libéré lors du changement de charge.

5. Unité de transmission selon l'une des revendications 1 à 4, **caractérisée en ce que** la deuxième transmission partielle (28) est formée d'une pluralité de pignons libres (48-50) disposés sur l'arbre (62), lesquels forment avec une pluralité correspondante de roues dentées (52-54) les paires de roues de la deuxième transmission partielle (28), dans laquelle la deuxième transmission partielle (28) comporte un arbre à cames (66) pouvant tourner et/ou coulisser axialement dans l'arbre (62), lequel est réalisé pour effectuer un changement de rapport dans la deuxième transmission partielle (28) et en particulier pour actionner simultanément les roulements libres (100) de deux rapports consécutifs.

6. Unité de transmission selon l'une des revendications 1 à 5, **caractérisée en ce que** les roulements libres (100) comportent des loquets de roulement pivotants (100), lesquels bloquent la rotation de l'arbre à cames (64) dans l'état intermédiaire avant le changement de charge.
